# EUROPEAN PATENT SPECIFICATION

(11) **EP 4 101 631 B1**
(45) Date of publication and mention of the grant of the patent: **26.11.2025**
(21) Application number: 22178152.9
(22) Date of filing: 09.06.2022
(51) Int. Cl.: B32B 1/00, B32B 1/08, B32B 29/00, B32B 29/06, C08L 1/08

(54) **HEAT-SEALABLE RE-PULPABLE CELLULOSE-BASED MULTILAYER, PACKAGING MATERIAL, MANUFACTURING METHOD THEREOF AND PACKAGING CONTAINER**
HEISSSIEGELBARE WIEDERZERFASERBARE CELLULOSEBASIERTE MEHRFACHSCHICHT, VERPACKUNGSMATERIAL, VERFAHREN ZU SEINER HERSTELLUNG UND VERPACKUNGSBEHÄLTER
MATÉRIAU D'EMBALLAGE MULTICOUCHE THERMOSOUDABLE ET RE-PULPABLE À BASE DE CELLULOSE, SON PROCÉDÉ DE FABRICATION ET CONTENEUR D'EMBALLAGE

(30) Priority: 09.06.2021 EP 21178608
(43) Date of publication of application: 14.12.2022
(73) Proprietor: Tetra Laval Holdings & Finance S.A., 1009 Pully (CH)
(72) Inventor: WAMSLER, Michael, 247 52 Dalby (SE); HORVATH, Andrew, 24135 Eslöv (SE); JONASSON, Katarina, 237 36 Bjärred (SE); ÖSTLUND, Magnus, 224 60 Lund (SE)
(74) Representative: Tetra Pak Patent Attorneys

(56) References cited:
- WO-A1-2018/135994
- JP-A- H11 323 783
- US-A1- 2018 194 863
- US-A1- 2020 039 713

## Description

### Technical field

The present invention relates to a heat-sealable, substantially plant-based and re-pulpable, multilayer packaging material, comprising a bulk layer of paper, paperboard or other cellulose-based material and to a method of manufacturing thereof. The invention further relates to multilayer carton packaging materials intended for oxygen-sensitive, especially liquid or semi-liquid, food packaging, and to carton-based packaging containers comprising the multilayer packaging material.

### Background of the invention

Packaging containers of the single use disposable type are often produced from a multilayer packaging laminate based on paperboard or carton. Such multilayer packaging materials intended for packaging of food often have the advantage of comprising a high proportion of high-quality cellulose fibres, making them desirable for carton recyclers, to re-pulp and return into a new paper manufacturing process.

When a packaging container made from such packaging material require some tightness, i.e. tightness to leakage of liquid and moisture from the filled product and/or to the ingress of substances, such as dirt or liquid from the outside environment into the package interior, the packaging material is usually fold-formed and heat-sealed to itself, by means of melt fusing the outermost heat-sealable layers of the multilayer packaging material. Such outermost heat-sealable layers are thus made of plastics made from thermoplastic polymers, which partly re-melt upon heating such as to allow melt fusing or welding when pressed towards a second surface of a similar compatible, thermoplastic polymer. Common examples of such thermoplastic polymers are polyolefins, such as polyehtylene and polypropylene, as well as polyesters, such as polyethylene therephthalate (PET).

Thermoplastic polymers are however not appreciated by cellulose fibre recyclers, as it may be seen as a less valuable waste fraction. It needs to be separated away from the fibre fraction and its further use much depends of the type of polymer content and its purity.

As different types of packaging containers involve different types of such thermoplastic polymers, it is difficult to recycle such plastics-carton laminates in a same recycling stream, because the recycling fraction of plastics will be a mix of various polymers, and the mix of polymers may vary in quality and physical properties from time to time, making it somewhat unreliable as a source of recycled material for new products. Often, such separated and recycled fraction of plastics is simply incinerated, or is used in low-grade end products, such as waste pouches or plastic flower pots.

The recent years, it has further become clear that single-use plastics and plastics used in packaging, often originating from fossil sources, and therefore contributing more to climate change, need to be reduced substantially and brought into a circular economy of materials, such that the materials may be recycled multiple times and considered as valuable resources rather than waste.

This is a challenge, as the plastics materials often are necessary for the lamination of multiple layers together into an effective laminated material, i.e., for the bonding of various layers together, as well as for heat sealing of the laminated material to itself in the processes of forming packaging containers from it.

Furthermore, in order to simplify recycling, there is an urge to reduce complexity of laminated polymer materials, such as in multilayer packaging materials with several different polymer layers having various barrier properties, such as oxygen gas barrier properties.

For recyclability, there is thus generally a goal to reduce the proportion of polymer in multilayer packaging materials, and further to reduce the complexity thereof. Preferably, polymers used in a laminated packaging material should be of a same type that may be recyclable together, and further be used in as low amounts as possible. Today there may be existing polymer waste streams for polyethylene or polyolefin recycling in many countries, or for recycling of polyethylene therephthalate, but there is an abundance of polymers used in various barrier materials and blended materials that do not each have a recycling stream of their own, and it is unclear how sorting and regeneration of the mateirals may be done. As now also plant-based polymer materials (i.e. polymers not originating from fossil material sources) are being explored for reducing carbon dioxide emissions, the complexity increases further.

For the sake of completeness, the common thermoplastic polymers, such as polyolefins and polyethylene therephthalate, can also be manufactured from plant-based raw material sources, such as sugar cane and other biomass. The properties and nature of such "green", i.e. plant-based, i.e. of renewable or non-fossil origin, polymers will be the same as their fossil-based counterparts, however, and they will thus need to be recycled to fractions of plastics, i.e. kept separate from other plant-based materials, such as cellulose fibres.

Furthermore, compostable and biodegradable materials are explored to a greater extent as well, and they may have different properties altogether from the traditional thermoplastic polymers. They are, however, still "plastics" in the sense that they cannot be recycled in the same fraction together with cellulose fibres, or water-dispersible. They may not even be recyclable at all.

One type of plant-based polymer are regenerated cellulose-based polymers. There are a number of different such regenerated polymers made by chemically modifying and dissolving cellulose, to be regained as new forms of polymers useful for films and fibres, e.g. for textiles and wrapping plastics, such as rayon, viscose and so-called cellophane. The new polymers obtained, are and behave more like "plastics", however, and will not be possible to recycle together with and within the same recycling fraction as re-pulped, i.e. re-dispersed, native cellulose materials. Thus, there is little gain by merely sourcing the materials of paper and polymers from the same raw mateiral source. Moreover, the chemical modification of such polymers have generally, at least in the past, not been environmentally friendly.

The regenerated celluloses would thus also need to be separated and collected into a recycling fraction of its own, and may not even be a homgenous material itself, since different such regenerated polymers may be based on different modification chemistries and behave and react differently to the same treatments.

A more recent type of such chemically modified and regenerated cellulose has been described in the international applications WO2018/146386A1 and WO2016/193542 and in the prework thereof.

Another type of modified cellulose, i.e. fibrous cellulose partly modified to dialcohol cellulose, exhibiting some thermoplastic behaviour has been described in the international application WO2018/135994A1.

One example of a commonly occurring type of packaging container, based on carton packaging laminates is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight and heat-selable layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is thus an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is ususally an outermost heat sealable thermoplastic polymer layer.

The packaging containers are generally produced by means of modern, high-speed packaging machines of the type that form, fill, and seal packages from a web or from prefabricated blanks of packaging material. Packaging containers may thus be produced by reforming a web of the laminated packaging material into a tube by both longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedal, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all erecting the blank to form an open tubular container capsule, of which one open end is closed off by means of folding and heat-sealing of integral end panels. The thus closed container capsule is filled with the intended food product, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

The conventional carton-based multilayer packaging material with a rather thick oxygen gas barrier layer of aluminium foil (such as from 5 to 10 µm), has been the standard, premium packaging material for many years, for aseptic and ambient packaging of liquid food.

There has over time been efforts to develop non-aluminium-foil materials for liquid food carton packaging, to reduce the total "carbon footprint" by reducing the part of the material derivable from the production of aluminium metal.

Some development has concerned pre-manufactured films or sheets having barrier functionalities, which may simply replace the aluminium-foil. Alternative developments have sought to combine several separate barrier layers in the laminated material.

Similar multilayer packaging materials may be intended for dry, but oxygen sensitive food products, such as milk powder and other dried food, still working by the heat-sealing tube-filling or blanks-filling principles for best possible hygienic performance to enable and ensure long term storage (long shelf-life) and resistance to degradation from ingress of gases, microbes and substances from the outside environment to the packages. Such packages may be based on thin papers rather than bulk layers and may be in the form of pouches rather than cuboid-shaped packages, unlike the brick-shaped or cuboid type of packages for liquid or semi-liquid food.

The packages described above are continuously produced in high numbers at high speeds (such as several thousands of packages per hour), thus forming a big part of consumable packaging and single-use plastics world-wide. Considering that each package may contain a significant content of plastics, it may be understood that there would be huge benefits to the climate and the environment, from reducing or even eliminating this content.

US Patent application No. US20180194863A1 discloses a fiber material completely made of a modified cellulose where a native cellulose is converted into a dialcohol cellulose (between 13-60 % calculated based on the preformed aldehyde) which is either formed into a paper sheet or as part of a multilayered paper material or is used for coating a substrate. From this, a package may be generated that can be heat-sealed. The modified cellulose fibers serve as an oxygen barrier.

US Patent application No. US2020039713A1 discloses modified cellulose which is converted based on the initial number of oxidizable C2-C3-bonds to 10-50 % dialcohol cellulose and is used as an additive in a native celllulose bulk layer produced by a foam-forming process to add compression strength in the Z-direction of the bulk layer. This bulk sheet can be used as a core layer in a laminated packaging material.

Japanese patent application No. JP411323783A discloses a paper material which is impregnated with dialcohol cellulose. It may be used in the field of packaging.

Accordingly, there is a need and an opportunity for improved, heat-sealable carton-based multilayer packaging materials in view of the prior art packaging materials, regarding recyclability and environmental sustainability.

### Disclosure of the invention

It is, accordingly, an object of the present invention to provide a better recyclable and more sustainable, heat-sealable carton-based multilayer packaging material.

It is also a general object of the invention to provide an improved, heat-sealable carton-based multilayer packaging material, which is substantially plant-based, i.e. of renewable (non-fossil) origin, and substantially re-pulpable to one and a same recycling fraction of cellulose fibres.

It is a specific object of the invention to provide heat-sealable carton-based multilayer packaging materials for oxygen-sensitive products, such as laminated packaging materials which do not contain an aluminium foil (i.e. so-called "non-foil") but have good gas and other barrier properties suitable for long-term, aseptic packaging and which are substantially plant-based and substantially re-pulpable to one and a same recycling fraction of cellulose fibres.

A further specific object, is to provide such heat-sealable, carton-based multilayer packaging material for liquid or semi-liquid food products.

The objects are attainable according to the present invention by the improved, heat-sealable, substantially plant-based and re-pulpable carton-based multilayer packaging material, the heat-sealed packaging container and the method of manufacturing of the packaging material, as defined in the appended claims.

### Summary of the invention

According to a first aspect of the invention, there is provided a heat-sealable, substantially plant-based and re-pulpable multilayer packaging material, as defined in independent claim 1.

This means that the materials of the multilayer packaging material are plant-based and also substantially re-dispersible in aqueous medium, such that they may be recycled together with the fibre fraction of the paperboard bulk layer. Only a minor amount, such as less than 10 weight-%, such as less than 7 weight-%, of the materials would not be recyclable with the fibres but to be collected as reject or a waste fraction. Thus, the plant-based and repulpable content of the multilayer packaging material would constitute at least 90 weight-%, such as at least 93 weight-%. The first, outermost, protective and water-dispersible layer or coating thus also comprises a cellulose fibre composition, comprising cellulose fibres, optional additives and optional plasticizers, wherein the cellulose fibers are at least partly modified to contain dialcohol cellulose, wherein the amount of the modified cellulose fibers in the first outermost layer is from 80wt% to 100 wt%, calculated per dry weight; and wherein the degree of conversion of the at least partly modified cellulose to dialcohol cellulose, based on the total number of oxidizable C2-C3 bonds in the cellulose material, is at least 10%, to render also the first, outermost, protective and water-dispersible layer heat-sealable, plant-based and re-pulpable.

It has successfully been concluded that the use of the above cellulose fibre composition makes it possible to reduce and even avoid using conventional thermoplastic polymers, normally originating from fossil sources, in the second, innermost layer. The cellulose fibre composition can thus contribute by being of plant-based origin, by not being environmentally questionable as to its manufacturing and chemical modification, and by being re-pulpable, i.e., re-dispersible in water. This is possible, because it is still in original fibrous form and has similarities to native cellulose by its nature and properties. The chemical modification to dialcohol cellulose enables the cellulose to exhibit thermoplastic behaviour despite still being a fibrous composition. The cellulose does not need to be mixed with conventional thermoplastic polymers to be applied as the second, innermost heat-sealable layer, and it can provide sufficiently strong heat seals, while remaining re-pulpable in the same way as the cellulose fibres in adjacent or laminated paper layers.

The heat-sealable, substantially plant-based and re-pulpable, multilayer packaging material, may also have a layer or multilayer portion comprising gas barrier material(s) arranged between the bulk layer and the second, innermost heat-sealable layer.

Different layers or multilayer portions within the multilayer packaging material may be laminated to each other by means of thin lamination layers comprising a water-dispersible thin adhesive, at from 0,5 to 5 g/m² dry weight, obtainable by wet dispersion lamination with interjacent aqueous adhesive compositions.

By selecting and optimizing the components of barrier layers or coatings as well as any necessary lamination layers, it is thus possible to further reduce the amount of thermoplastic polymer in the multilayer packaging material to a minimum, thus resulting in a substantially plant-based and re-pulpable packaging material.

According to a second aspect of the invention, there is provided a heat-sealed packaging container comprising the heat-sealable, substantially plant-based, and re-pulpable multilayer packaging material. The packaging container may be intended for packaging of liquid, semi-solid or wet food. According to an embodiment, the packaging container is manufactured at least partly from the laminated packaging material of the invention, and according to a further embodiment it is in its entirety made of the laminated packaging material.

According to a third aspect of the invention there is provided a method of manufacturing a heat-sealable, substantially plant-based and re-pulpable multilayer packaging material as defined according to the first aspect above, which comprises
a first step of providing and forwarding a substrate web, the substrate web being a web of a substantially plant-based and re-pulpable pre-laminated substrate structure or a single substrate layer, a second step of providing a cellulose fibre composition comprising cellulose fibres, optional additives and optional plasticizers, wherein the cellulose fibres are partly modified to contain dialcohol cellulose and wherein the amount of modified cellulose fibres is from 80wt% to 100 wt%, calculated per dry matter weight; and wherein the degree of conversion of the partly modified cellulose to dialcohol cellulose, based on the total number of oxidizable C2-C3 bonds in the cellulose, is at least 10%, and a third step of applying the cellulose fibre composition onto the substrate web, to form a second innermost heat-sealable layer in the heat-sealable, substantially plant-based and re-pulpable multilayer packaging material, to be directed to, and to form the inside of a packaging container.

The third step of applying the cellulose fibre composition onto the substrate web may be performed by extrusion coating, or alternatively, by laminating a pre-manufactured film or sheet made from the cellulose fibre composition onto the substrate web by means of an interjacent bonding layer.

The substrate web may be a pre-laminated multilayer structure comprising a bulk layer and a layer or a multilayer portion comprising gas barrier material(s).

If the thickness and amount of the dry cellulose fibre composition is not too high, such as lower than 25 g/m², such as lower than 20- g/m², it may alternatively be applied by means of aqueous dispersion coating and subsequent drying.

According to an embodiment, the method comprises a fourth step of applying a similar or the same cellulose fibre composition as of the second innermost heat-sealable layer, onto the opposite side of the substrate web to form the first, outermost, protective and water-dispersible layer or coating, thus also being made of a cellulose fibre composition, comprising cellulose fibres, optional additives and optional plasticizers, wherein the cellulose fibers are partly modified to contain dialcohol cellulose, wherein the amount of the modified cellulose fibers in the first outermost layer is from 80 wt% to 100 wt%, calculated per dry weight; and wherein the degree of conversion of the partly modified cellulose to dialcohol cellulose, based on the total number of oxidizable C2-C3 bonds in the cellulose material, is at least 10%, to render also the first, outermost, protective and water-dispersible layer heat-sealable, plant-based and re-pulpable.

By the method of the third aspect, it is thus possible to manufacture the improved heat-sealable, carton-based, multilayer packaging material of the first aspect of the invention.

### Detailed description

With the term "long-term storage", used in connection with the present invention, is meant that the packaging container should be able to preserve the qualities of the packed food product, i.e., nutritional value, hygienic safety and taste, at ambient conditions for at least 1 or 2 months, such as at least 3 months, preferably longer.

With the term "package integrity", is generally meant the package tightness, i.e., the resistance to leakage or breakage of a packaging container. The term encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures, and the like within each material layer itself, and yet another contribution comes from the strength of the sealing joints, by which the material is sealed together at the formation of a packaging container. Regarding the laminated packaging material itself, the integrity property is thus mainly focused on the adhesion of the respective laminate layers to its adjacent layers, as well as the quality of the individual material layers. Regarding the sealing of the packages, the integrity is mainly focussed on the quality of the sealing joints, which is ensured by well-functioning and robust sealing operations in the filling machines, which in turn is ensured by adequately adapted heat-sealing properties of the laminated packaging material.

The term "liquid or semi-liquid food" generally refers to food products having a flowing content that optionally may contain pieces of food. Dairy and milk, soy, rice, grains and seed drinks, juice, nectar, still drinks, energy drinks, sport drinks, coffee or tea drinks, coconut water, wine, soups, jalapenos, tomatoes, sauce (such as pasta sauce), beans and olive oil are some nonlimiting example of food products contemplated.

The term "aseptic" in connection with a packaging material and packaging container refers to conditions where microorganisms are eliminated, in-activated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that he package has barrier properties towards gases and vapours, such as towards oxygen gas, in order to keep its original taste and nutritional value, such as for example its vitamin C content.

With the term "bulk layer" is normally meant the thickest layer or the layer containing the most material in a multilayer laminate, i.e. the layer which is contributing most to the mechanical properties and the dimensional stability of the laminate and of packaging containers folded from the laminate, such as paperboard or carton. It may also mean a layer providing a greater thickness or distance in a laminated sandwich structure, which further interacts with stabilising facing layers, which have a higher Young's modulus, on each side of the distancing bulk layer, in order to achieve sufficient such mechanical properties, such as bending stiffnes and dimensional stability.

The term "heat-sealing" means heat-bonding by melt fusing or welding of two material surfaces together, such that the materials to be joined to some extent inter-mixes or inter-locks across the interface between the material surfaces. This is well known in connection to softened or partly molten thermoplastic polymers that are pressed towards each other, such that the increased mobility of the polymer chains enables some chain entanglement across the bonding interface. Upon cooling, the entangled polymer chains become locked in that state as the polymer material cools down and solidifies again. Something similar appears to occur also in the case of the partly modified cellulose used according to the invention, such that a strong bond is formed between two welded material surfaces.

The meaning of the term "native cellulose" is cellulose which is not chemically modified.

The term "cellulose fibre" has the meaning of cellulose fibre in its natural and original form, i.e. does not encompass regenerated cellulose (which is chemically altered and recreated from the chemical reaction solution, even if it may be regenerated into fibrous form) and does also not encompass cellulose defibrillated into nano-scale, i.e. molecular size level cellulose, so-called fibrils, crystals or fibril aggregates.

Cellulose fibres may have different lengths and aspect ratio depending on pulping methods, and different pulps generally have different properties. These properties may still be varied within the scope of the invention, to provide different prerequisites for different needs.

An example of suitable cellulose fibers used when preparing the material and product according to the present invention may have but is not limited to an average diameter of at least 1 µm such as at least 5 µm, or at least 8 µm, or at least 12 µm. The average length of the fibers may be at least 0.3 mm, such as 0.3-4 mm.

There is thus a major difference between cellulose fibers and fibrils or nanofibrils. Fibrils have a diameter of a few nanometers while fibers are in the micrometer range i.e. fibers are thousand times bigger. Therefore many properties that fibrils exhibit are not seen for fibers.

The cellulose may be any suitable cellulose such as cellulose obtained from pulping. In one embodiment the cellulose is obtained from the Kraft process. In another embodiment the cellulose is obtained from bleached pulp from the Kraft process. The cellulose obtained from a pulping process usually also contains hemicellulose. However, the hemicellulose will also undergo the modification as or similarly as described herein.

Cellulose is a polysaccharide found in the cell wall of plants and cellulose and cellulose derivatives may be found in a variety of different products such as paper, paper board, textiles, implants and gunpowder. The cellulose of the present invention may be of lignocellulosic origin such as from wood.

The term "re-pulpable" means re-dispersible to cellulose pulp in water dispersion, by a conventional pulper or by vigorous stirring in an aqueous medium at conventional paper pulp consistency of a few percent of cellulose fibres.

The term "substantially plant-based and re-pulpable" means that substantially all the materials of the multilayer packaging material are plant-based and also re-dispersible in aqueous medium, such that they may be recycled together with the fibre fraction of the paperboard bulk layer, which usually is the main recycling material obtained from carton-based multilayer packaging materials. By "substantially all the materials" are meant that only minor amounts would not be recyclable with the fibres, but collected as reject or a waste fraction, such as a nanometer-thick metallisation layer, or a few grams per square meter of pre-coating or glue, such as starch or PVOH or the like. The minor amounts would constitute less than 10 wt-%, such as less than 7 wt-%, such as less than 5 wt-%, such as less than 3 wt-% of the total materials in the multilayer material. Accordingly, the "substantially all the materials", i.e. the "substantially plant-based and repulpable" content of the multilayer packaging material would constitute at least 90 wt%, such as at least 93 wt%, such as at least 95 wt%, such as at least 97 wt%.

The bulk layer may be a paperboard or paper of a "liquid paperboard" standard, i.e., having relatively high bending stiffness compared to other carton qualities as well as appropriate sizing for the packaging of liquids and appropriate food safety quality for the packaging of food products. For packaging of dry goods, the requirements of bending stiffness may be lower and other paperboards or cartons are also possible. Looking at the most demanding type of carton bulk layer packaging, however, i.e., for packaging of liquids, the required bending stiffness of the final multilayer packaging material needs to be reached. This can alternatively be done by combining a relatively weaker bulk or centre layer, with facing layers on both sides, that are thinner but have a higher Young's modulus, such that the laminated material still achieves sufficient total bending stiffness, thanks to the centre layer providing a distance between the interacting facing layers (thus creating a "Sandwich effect" or "I-beam effect"). The facing layers may be thinner papers, such as a paper print substrate on the outside of the bulk layer (i.e., directed towards the outside of a packaging container) and a thin paper substrate for barrier coatings on the inside of the bulk layer.

Thus, also bulk layers of paper or cellulose sheets having less or no bending stiffness, may be used, when laminated to further layers such that a stiffening sandwich effect is obtained. Examples could be linerboard or fluting-board (used as flat material, however) or foam-formed cellulose sheets having very low density, but still sufficient delamination strength (i.e., Scott Bond) and Z-directional compression resistance, resisting compression forces perpendicular to the plane of the bulk paper or sheet.

A conventional paper or paperboard bulk layer for use in the invention may have a thickness of from about 100 µm up to about 600 µm, and a surface weight of approximately 100-500 g/m², preferably about 200-300 g/m², and may be a conventional paper or paperboard of suitable packaging quality.

For low-cost aseptic, long-term packaging of liquid food, a thinner packaging laminate may be used, having a thinner paper bulk layer. The packaging containers made from such packaging laminates are not fold-formed and more similar to pillow-shaped flexible pouches. Also packages for dry food may be of this type. A suitable paper for such pouch-packages usually may have a surface weight of from about 50 to about 140 g/m², preferably from about 70 to about 120 g/m², more preferably from 70 to about 110 g/m². As the barrier-coated substrate in this invention in itself may contribute with some stability to the laminated material, the paper layer corresponding to a "bulk" layer may be even thinner, and interact with the barrier cellulose-based substrate in a sandwich interaction to still produce a laminated packaging material having desired mechanical properties, such as sufficient stiffness and stability, altogether.

The layer or multilayer portion comprising gas barrier material(s) may comprise an additional substrate layer of paper- or other water-dispersible cellulose-based material, which is coated with at least one gas barrier material to a total gas barrier coating thickness from 2 to 5000 nm, such as from 2 to 4000 nm.

The gas barrier materials may be barrier-coated substrates made by aqueous dispersion coating or vapour deposition coating of thin barrier layers onto thin paper carrier substrates. There are various aqueous dispersion coating processes and vapour deposition coating processes and material recipes for such coatings, that may reduce the amounts and layer thicknesses of actual gas barrier materials to nanometre scale, or at most to a few micrometres only, while still providing comparatively good barrier properties. Thus, if the substrate layer, or "barrier-carrying layer", is a thin paper or other thin cellulose-based material, the thin paper may act also as a facing layer in sandwich interaction with the bulk layer, as described above. Moreover, it may constitute a major part of a multilayer portion comprising barrier materials, and by being a paper substrate it may contribute to a substantially plant-based and re-pulpable material overall and be recyclable to the same fibre fraction in recycling as the bulk layer. The development of such non-foil, barrier materials that are to a higher extent based on renewable sources (paper or cellulose-based materials) is an important step towards a more sustainable packaging material. The barrier coatings are either very thin (such as from 10-80 nanometres) or water-dispersible and still thin (such as 1-4 micrometres). They will form negligible parts of recycling fractions and/or be dispersed or dissolved in water, such that the substances may be recovered from the wastewater of the fibre re-pulping liquid in a fibre recycling process. For example, the proportion of aluminium from a nanometre-thick metallised layer, such as 60 nm, would be reduced to just a small fraction of around 1 % of the aluminium that is needed in an aluminium foil of a standard 6 µm (6000 nm) thickness.

The substrate suitable for barrier-coatings for the invention is not limited to a certain type of paper, but includes also other cellulose-based substrates, based on any type of native cellulose, fibrous or fibrillar cellulose. Substrates from plastics or synthetic polymers are not regarded equally advantageous, however, since they would add a plastics component to the multilayer packaging material. Such thermoplastic polymer films may be made from so-called regenerated (i.e. dissolved and re-precipitated cellulose), or be any conventional substrate film polymer, like polyesters, such as PET or BOPET, polyamides or polyolefins. There is technology available, however, to make very thin substrate films, such as at thicknesses down to about 5 µm, why such alternatives might not be entirely excluded. Such a film could be manufactured from plant-based, non-fossil sources, but would not be re-pulpable to one same recycling fraction of cellulose fibres as the bulk layer.

It has been seen so far, that papers or cellulose-based substrates having a surface smoothness of 200 ml/min Bendtsen or below, such as about 150 ml/min or below, on its coating side ("top side" or "print side"), may provide good barrier-coated structures for a layer portion of gas barrier materials according to the present invention, from an oxygen barrier point of view.

Processes suitable for coating of low dry-content polymer dispersion or solution compositions are broadly any suitable wet coating methods, such as gravure roll coating, air spraying, airless spraying, reverse roll coating, wire bar coating, lip coating, air knife coating, curtain flow coating, spray coating, dip coating, and brush coating methods.

The additional substrate layer of paper- or other water-dispersible cellulose-based material may be coated to a dry coating thickness from 100 to 5000 nm (from 0,1 to 5 µm), such as from 100 to 4000 nm (from 0,1 to 4 µm), such as from 300 to 3500 nm (from 0,3 to 3,5 µm), such as from 300 to 2500 nm (from 0,3 to 2,5 µm), with a gas barrier material comprising a polymer selected from the group consisting of vinyl alcohol polymers and copolymers, such as from the group consisting of polyvinyl alcohol, PVOH, and ethylene vinyl alcohol, EVOH, starch and starch derivatives, hemicellulose and hemicellulose derivatives, nanofibrillar cellulose/ microfibrillar cellulose, NFC/ MFC, nanocrystalline cellulose, NCC, and blends of two or more thereof.

In one embodiment, the barrier pre-coating compositions is based on one of the two most common types of polymers and coplymers suitable for dispersion coating, based on on vinyl alcohol monomers, i.e. polyvinyl alcohol (PVOH) and ethylene vinyl alchol (EVOH).

Preferably, the gas barrier polymer is PVOH, because it provides good film formation properties, gas barrier properties, cost efficiency, food compatibility and odour barrier properties.

A PVOH-based gas barrier composition performs best when the PVOH has a degree of saponification of at least 98 %, preferably at least 99 %, although also PVOH with lower degrees of saponification will provide oxygen barrier properties. On the other hand, EVOH may be advantageous by providing some moisture resistance to the barrier material, since the copolymer comprises ethylene monomer units. The amount is depending on the choice of EVOH grade, but it will be at the expense of some oxygen barrier property inherent from the material, in comparison to PVOH. Conventional EVOH polymers, are normally intended for extrusion and are not possible to disperse or dissolve in an aqueous medium in order to produce a thin liquid film coated barrier film of 3,5 g/m² or below. It is believed that EVOH should comprise a rather high amount of vinyl alcohol monomer units to be water-dispersible and that the properties should be as close to those of liquid film coating grades of PVOH as possible. An extruded EVOH layer is thus not an alternative to a liquid film coated EVOH, because it inherently has less similar properties to PVOH than EVOH grades for extrusion coating, and because it cannot be applied at a cost-efficient amount below 4 g/m² as a single layer by extrusion coating or extrusion lamination.

The gas barrier material may further comprise from about 1 to about 20 weight %, of an inorganic laminar compound based on dry coating weight, such as exfoliated nanoclay particles, such as bentonite. Thus, the gas barrier material layer may include from about 99 to about 80 weight % of the polymer based on the dry coating weight. An additive, such as a dispersion stabiliser or the like, may also be included in the gas barrier composition, preferably in an amount of not more than about 1 weight % based on the dry coating. The total dry content of the composition is preferably from 5 to 15 weight-%, more preferably from 7 to 12 weight-%.

A further possible additive in the gas barrier material may be a polymer or compound with functional carboxylic acid groups, in order to improve the water vapour and oxygen barrier properties of a PVOH coating. Suitably, such polymer with functional carboxylic acid groups is selected from among ethylene acrylic acid copolymer (EAA) and ethylene methacrylic acid copolymers (EMAA) or mixtures thereof. In one embodoment, such a barrier layer mixture may essentially consist of PVOH, EAA and an inorganic laminar compound. The EAA copolymer may be included in the barrier layer in an amount of about 1-20 weight %, based on dry coating weight.

It is believed that some further improved oxygen and water barrier properties may result from an esterification reaction between the PVOH and the EAA at an increased drying temperature, whereby the PVOH is crosslinked by hydrophobic EAA polymer chains, which thereby are built into the structure of the PVOH. Crosslinking can alternatively be induced by the presence of polyvalent compounds, e.g. metal compounds such as metal-oxides. Such mixtures are, however, more expensive because of the cost of the additives and may be less preferred from a recyclability point of view. Generally, crosslinking may, however, counteract the effect of water re-dispersibility, and needs to be balanced from that point of view.

In another embodiment, the gas barrier material is based on nanocrystalline cellulose (CNC), or compositions comprising nanocrystalline cellulose, such as compositions comprising a blend of CNC with polyvinyl alcohol (PVOH). The use of such a gas barrier material has a great advantage, as it is another form of cellulose to be used in very low amounts, which will thus also be plant-based and re-pulpable to the same recycling fraction of cellulose fibres as the bulk layer.

Starch and starch derivatives are also known to inherently provide some gas barrier properties, and an example of a hemicellulose derivative having gas barrier properties is xylan.

The gas barrier material coated onto the additional substrate layer of paper- or other water-dispersible cellulose-based material may alternatively be a vapour deposition coating, such as selected from the group consisting of metallization coatings, aluminium oxide (AlOx) coatings, silicon oxide (SiOx) coatings, and amorphous diamond-like carbon (DLC) coatings, such as an aluminium metallized coating.

To be suitable for a barrier-coating step by means of a vapour deposition coating process, the substrate needs to be thin, such as 60 g/m² or below, such as 50 g/m² or below, preferably 45 g/m² or below and more preferably 40 g/m² or below, for reasons of efficiency and production economy and to avoid blistering of the coating, due to air being entrapped in a fibrous, porous cellulose-based substrate. On the other hand, cellulose-based substrates thinner or with a lower grammage than 30 g/m² may be mechanically too weak and/or less dimension stable, when they are coated with wet dispersions and subsequently dried, thus exhibiting shrinkage or curling problems. It is thus more preferred to use papers having a grammage of from 30 to 50 g/m², such as most preferable from 35 to 45 g/m².

For optimal barrier properties by means of minimal amount of barrier material, it has been seen that a vapour deposition coating, to be coated to nanometer thicknesses only, may need a thin first coating of a gas barrier polymer, to first be applied onto a paper or cellulose-based substrate. A good such first coating of gas barrier material is a polymer selected from vinyl alcohol polymers and copolymers, which have inherent gas barrier properties, and which are food safe and environmentally sustainable both regarding recyclability and in industrial coating and lamination processes. Such polymers are water dispersible and/or dissolvable in water and may be applied by means of an aqueous "dispersion coating" process, or a so called "liquid film coating" process.

Thus, the additional substrate layer of paper- or other water-dispersible cellulose-based material may be coated with a first coating of a gas barrier material formed by coating and subsequent drying of an aqueous dispersion or solution of a gas barrier material, and further with a vapour deposition coating of a gas barrier material selected from metals, metal oxides, inorganic oxides, and amorphous diamond-like carbon, applied on the first coating.

In an embodiment, the first coating of a gas barrier material may comprise a polymer selected from the group consisting of vinyl alcohol polymers and copolymers, such as from the group consisting of polyvinyl alcohol, PVOH, and ethylene vinyl alcohol, EVOH, and the further vapour deposition coating of a gas barrier material is a material selected from metals, metal oxides, inorganic oxides, and carbon coatings.

In a further embodiment, the vapour deposition coating is of a gas barrier material selected from the group consisting of an aluminium metallisation coating and aluminium oxide, AlOx, and preferably it is an aluminium metallisation coating.

In yet a further embodiment, the first coating of a gas barrier material is a first coating based on a compositions comprising nanocrystalline cellulose, (CNC), such as a composition comprising a blend of CNC with polyvinyl alcohol (PVOH), and the further vapour deposition coating comprises a gas barrier material selected from metals, metal oxides, inorganic oxides, and carbon coatings.

A first coating of a gas barrier material may be applied at a total amount of from 0,1 to 4 g/m², more preferably from 0,5 to 3,5 g/m², such as from 0,5 to 3 g/m², dry weight. Below 0,1 g/m², there will be no gas barrier properties achieved at all, while above 4 g/m², the coating may become brittle and more likely to crack and, anyway, at above 3,5, or even above 3 g/m², the coating will not bring sufficient cost-efficiency to the packaging laminate, due to high cost of barrier polymers in general and due to high energy cost for evaporating off the liquid. A recognisable level of oxygen barrier is achieved by PVOH at 0,5 g/m², and above, and a good balance between barrier properties and costs is achieved between 0,5 and 3 g/m².

In an embodiment, the first coating of a gas barrier material may be applied in two consecutive steps with intermediate drying, as two part-layers. When applied as two part-layers, each layer is suitably applied in amounts from 0,1 to 2 g/m², preferably from 0,5 to 1,5 g/m², and allows a higher quality total layer from a lower amount of liquid gas barrier composition. In an
embodiment, the two part-layers are applied at an amount of from 0,5 to 1 g/m² each.

In a further embodiment the barrier pre-coating has been applied by means of dispersion or solution coating at an amount of from 0,5 to 2,5 g/m², preferably from 0,5 to 2 g/m², dry weight.

The vapour deposited barrier coating to finally be coated onto the surface of the first coating of a gas barrier material, is applied by means of physical vapour deposition (PVD) or chemical vapour deposition (CVD), for example by plasma enhanced chemical vapour deposition (PECVD).

Such thin vapour deposited coating layers are nanometre-thick, i.e., they have a thickness that is most suitably counted in nanometres, for example of from 5 to 500 nm (50 to 5000 Å), such as from 5 to 200 nm, more such as from 5 to 100 nm, such as from 5 to 50 nm.

Generally, below 5 nm the barrier properties may be too low to be useful and above 200 nm, such as above 100 nm, such as above 50 nm, depending on the type of vapour deposition coating, the barrier coating may be less flexible and, thus, more prone to cracking when applied onto a flexible substrate and would also cost more.

In an embodiment, the barrier deposition coating is applied to a thickness of from 10 to 80 nm, such as from 10 to 50 nm, such as from 10 to 45 nm.

A vapour deposited layer, substantially consisting of aluminium metal may have a thickness of from 5 to 50 nm, more preferably from 5-40 nm, which corresponds to less than 1 % of the aluminium metal material present in an aluminium foil of conventional thickness for packaging, i.e. 6,3 µm. While vapour deposition metal coatings require significantly less metal material, they only provide a low level of oxygen barrier properties, at most, and need to be combined with a further gas barrier material in order to provide a final laminated material with sufficient barrier properties. On the other hand, it may complement a further gas barrier layer, which does not have water vapour barrier properties, but which is rather sensitive to moisture.

Other examples of vapour deposition coatings are aluminium oxide (AlOx, Al₂O₃) and silicon oxide (SiOx) coatings. Generally, PVD-coatings are more brittle and less suitable for incorporation into packaging materials by lamination, while metallised layers as an exception do have suitable mechanical properties for lamination material despite being made by PVD.

Normally, an aluminium metallised layer inherently has a thin surface portion consisting of an aluminium oxide due to the nature of the metallisation coating process used.

In an embodiment, an aluminium metallised layer has been applied to an optical density (OD) of from 1.8 to 2.5, preferably from 1.9 to 2.2. At an optical density lower than 1.8, the barrier properties of the metallised film may be too low. At above 2.5, on the other hand, the metallisation layer may become brittle, and the thermostability during the metallisation process will be low due to higher heat load when metallising the substrate film during a longer time. The coating quality and adhesion may then be negatively affected.

Other coatings may be applied by means of a plasma enhanced chemical vapour deposition method (PECVD), wherein a vapour of a compound is deposited onto the substrate under more or less oxidising circumstances. Silicon oxide coatings (SiOx) may, for example, also be applied by a PECVD process, and may then obtain very good barrier properties under certain coating conditions and gas recipes.

DLC defines a class of amorphous carbon material (diamond-like carbon) that displays some of the typical properties of diamond. Preferably, a hydrocarbon gas, such as e.g. acetylene or methane, is used as process gas in a plasma for producing a coating of amorphous hydrogenated carbon barrier layer applied by a PECVD vacuum process, i.e. a DLC. DLC coatings applied by PECVD under vacuum provide good adhesion to adjacent polymer or adhesive layers in a laminated packaging material. Particularly good adhesion to adjacent polymer layers, are obtained with polyolefins and in particular polyethylene and polyethylene-based co-polymers.

In an embodiment, the layer or multilayer portion comprising gas barrier material(s) may comprise a layer or sheet comprising microfibrillated cellulose. Coatings, papers, and sheets of such microfibrillated cellulose materials are known to provide gas barrier properties. Their properties in the context of the present invention should be balanced versus the re-pulpability of the material.

In a further embodiment, the layer or multilayer portion comprising gas barrier material(s) may comprise a layer or sheet comprising modified cellulose fibres, which contain dialcohol cellulose by a degree of conversion from cellulose to dialcohol cellulose, based on the total number of oxidizable C2-C3 bonds in the cellulose fibres, being at least 20%. Gas barrier properties of such materials become more apparent at higher degrees of conversion to dialcohol cellulose, i.e. higher than 20 %, such as from 30 to 50 %.

The layer or multilayer portion comprising gas barrier material(s), may be bonded to the bulk layer by wet application of an aqueous dispersion of an adhesive composition comprising an adhesive polymer binder onto one of the web surfaces to be laminated and pressing the two paper webs together while they are forwarded through a lamination roller nip, thus providing a laminated structure by wet lamination. The moisture of the aqueous adhesive composition may be absorbed into the fibrous cellulose network of at least one of the two paper layers, and partly evaporating with time, during the subsequent lamination processes. There is thus no need for a forced drying step. The heat-sealable, multilayer packaging material may thus further comprise lamination layers comprising water-dispersible thin adhesive layers, at from 0.5 to 5 g/m² dry weight, obtainable by wet lamination by means of aqueous adhesive compositions.

The layer or multilayer portion comprising gas barrier material(s) may be laminated to the bulk layer by from 0.5 to 5 g/m² of an interjacent bonding composition comprising a binder selected from the group consisting of acrylic polymers and copolymers, starch, starch derivatives, cellulose derivatives, polymers and copolymers of vinyl acetate or vinyl alcohol, and copolymers of styrene-acrylic latex or styrene-butadiene latex.

For best possible environmental sustainability, adhesive binders originating from plants or non-fossil sources are preferred.

In the case of the multilayer portion comprising a gas barrier material of modified cellulose fibres, which contain dialcohol cellulose by a degree of conversion from cellulose to dialcohol cellulose, based on the total number of oxidizable C2-C3 bonds in the cellulose fibres, being at least 20%, this material may alternatively be directly coated onto the bulk layer of paper or paperboard. Such a direct coating operation may be carried out by aqueous dispersion coating and subsequent drying, or by extrusion coating of the cellulose fibre composition.

The second innermost, heat-sealable layer is thus made of a cellulose fibre composition, comprising cellulose fibres, optional additives and optional plasticizers, the cellulose fibres being partly modified to contain dialcohol cellulose, and the amount of modified cellulose fibers in the innermost layer being from 80wt% to 100 wt%, calculated per dry weight; and the degree of conversion of the partly modified cellulose to dialcohol cellulose, based on the total number of oxidizable C2-C3 bonds in the cellulose fibres, being at least 10%. The proportion of cellulose fibres of from 80 to 100 wt%, like all cellulose products and papers, comprises also some water, which constitutes the natural moisture content inherent to all paper products at normal environment conditions. The natural moisture content of cellulose products can thus vary between 6 and 12 %, depending on the climate conditions at which it is stored.

In addition, the second innermost, heat-sealable layer may further comprise a plasticizer at an amount from 0.5 to 20 wt-% based on the dry content of the layer.

The first outermost, protective, re-pulpable layer or coating is made of the same cellulose fibre composition as the second, innermost, heat-sealable layer, and may also further comprise a plasticizer at an amount from 0.5 to 20 wt-% based on the dry content of the layer.

In an alternative embodiment, the first, outermost, protective and water-dispersible layer or coating may be a thin coating merely to protect the outside surface of the multilayer packaging material, such as an aqueous latex coating, a wax coating or a varnish, at an amount from 1 to 10 g/m².

The plasticizer may be a compound selected from the group consisting of polyols, such as glycerol, and non-synthetic polymers such as polysaccharides, such as starch, starch derivatives or cellulose derivatives. In an embodiment, the plasticizer may be a compound selected from the group consisting of glycerol, polyethylene glycols (PEG), and polyvinyl alcohols (PVOH).

In an embodiment, the plasticizer may thus be a compound selected from the group consisting of polyols, such as glycerol, and polysaccharides, such as starch, starch derivatives or cellulose derivatives.

In a further embodiment, the plasticizer may be a compound selected from the group consisting of glycerol, polyethylene glycols (PEG), and polyvinyl alcohols (PVOH).

The modification of oxidizable C2-C3 bonds of the glucose monomer units of the cellulose molecules takes place firstly at the surface of the cellulose nanofibrils constituting the cellulose fibers. As the modification proceeds, it is believed that the modified nanofibrils in the fibres obtain a core-shell structure, and thereby, from the dialcohol shell, get mechanical and physical properties that resemble the properties of thermoplastic polymers, which has been found advantageous in the processes of extrusion and injection molding. The modification reactions and technology around the production of the dialcohol-modified cellulose are further described in the published international patent application WO2018/135994A1. Some effects of that the cellulose changes to attain a more flowable rheological behaviour may be seen already at a degree of conversion of 10% of the C2-C3 bonds available in the cellulose fibres to dialcohol cellulose. At a degree of conversion 30 to 50 %, the best rheological properties have been observed, such as at 35 to 45 %. Already at above 50% degree of conversion, the cellulose starts to transform to liquid solution, which is not desirable for the present invention. As the degree of conversion increases towards 100%, the dialcohol-modified cellulose is more or less in liquid form and with very few, if any, fibres left in the composition.

Contrary to the description of WO2018/135994, the modified cellulose fibres should not be blended with a thermoplastic polymer for the purpose of rendering the composition more thermoplastic. It is in the prior publication suggested that "the modification of the fibers will increase the dispersity of the fibers when mixed with a second polymer leading to reduced number of fiber pullouts or debonding", i.e. preventing that the matrix does not adhere properly to the fiber. Such blending with conventional thermoplastic polymers would defeat the purpose, however, of providing a plant-based and re-pulpable, i.e. water-dispersible, material. According to the present invention, it is not necessary and not desirable to blend the modified dialcohol cellulose with conventional thermoplastic polymers. Some additive amount of a natural polymer, such as starch, starch derivative and cellulose derivative may be possible to do for plasticizing purposes, as long as the composition would still be water dispersible. However, as described in WO2018/135994, the cellulose may also be processed without any addition of further plasticizers and additives, since it may become more flowable and processable by allowing it to sorb water moisture. For enabling processing using the melt-like flow behaviour, the cellulose fibres have sorbed from 5 to 40 wt% moisture. The term "sorption" covers both "adsorption" and "absorption" and the term "sorbing" encompasses both "adsorbing" and absorbing".

Potential, optional additives in addition to plasticizers could be crosslinking agents, compatitbilizers, fillers or pigments and defoaming agents.

In an embodiment the cellulose fibre composition comprises substantially only modified cellulose fibres and sorbed water.

The cellulose fibre compositions used for the second, innermost heat selable layer, according to the invention, is possible to apply by an extrusion coating process.

Furthermore, the cellulose fibre composition inherently provides some barrier properties towards gases, such as oxygen and water vapour, and the properties do not deteriorate upon "melt" processing into final layers or sheets.

When determining the degree of modification or conversion of the cellulose into dialcohol cellulose the first step is to determine the degree of conversion into dialdehydes, after oxidation of the cellulose into dialdehyde cellulose. This is done by determining the carbonyl content in the oxidized cellulose, by reaction with hydroxylamine hydrochloride and titration with sodium hydroxide. The conversion is given as a percentage of the maximum amount of conversion assuming pure cellulose as starting material. In the second step all the aldehydes are assumed to be converted into alcohols (which also can be supported by a second carbonyl content determination) unless there is any indication or description stating the opposite.

Thus, in practice, determination of the carbonyl content after oxidation of cellulose to dialdehyde cellulose, is normally sufficient for determining the degree of final modification or conversion of the cellulose into dialcohol cellulose.

The carbonyl content is thus to be determined by a protocol based on Zhao et al.: (Determination of degree of substitution of formyl groups in polyaldehyde dextran by the hydroxylamine hydrochloride method. Pharm. Res. 8:400-402 (1991)). The fibers were suspended in water and adjusted to pH 4, followed by dewatering to a gel-like consistency. Then, approximately 0.25 g (dry basis) of these fibers were stirred with 25 ml of 0.25 M hydroxylamine hydrochloride solution at pH 4 for at least 2 h before the fibers were separated from the solution by filtration using a pre-weighed filter paper. The exact mass of the fibers was then determined by oven-drying of the filter
paper and the carbonyl amount was determined by titration back to pH with 0.10 M sodium hydroxide. Two to three independent oxidations were performed at each oxidation time, and each reaction with hydroxylamine hydrochloride was performed in triplicate.

The degree of conversion of cellulose to dialdehyde cellulose prior to reduction to dialcohol cellulose is preferably above 13%, such as above 18% or above 20%, based on the total number of oxidizable C2-C3 bonds in the natural cellulose material.

The amount of the modified cellulose fibers in the second, innermost heat-sealable layer may be 90wt% or more, such as 95wt% or more, such as 100wt%.

The degree of conversion in the second, innermost heat-sealable layer of the partly modified cellulose to dialcohol cellulose, based on the total number of oxidizable C2-C3 bonds in the cellulose, may be at least 30%, or at least 32%, or at least 40%, or at least 45% and less than 50%, such as from 30% to 45%.

The sorption of moisture or water may be done by leaving the material in a moisture-containing environment for a sufficient period of time, until sufficient amount of moisture or water has been sorbed by the material. The moisture containing environment may be a container with steam. The material may also sorb water by adding water to the material or by submerging the material into water for a sufficient period of time. Cellulose will sorb less moisture or water if the temperature during the sorption is increased and therefore the temperatures should not be increased too much. In one embodiment the sorption is done at 30 °C or lower such as at room temperature. The relative humidity (RH) during the adsorption may be 30-100% such as 50-99% or 70-95%. The material may be left in the moisture-containing environment for at least 5 minutes, or at least 15 minutes, or at least 30 minutes or at least 1 hour, or at least 2 hours. The material may be dipped in water or submerged in the water. The sorption time is partly dependent on the amount of material and the method of adding moisture or water. The moisture content of the material after the sorption step may be 5-40wt% such as 10-30wt%.

By allowing the material to sorb moisture, the material may be more easily processed with thermoplastic-like "melt"-behaviour since lower temperature and less force is needed. Furthermore the sorption is believed to inhibit discoloration during processing since the processing temperature may be lowered. A material that is not allowed to sorb moisture should preferably have a high degree of modification in order to facilitate the melt-processing of high-cellulose-content material. The material may have a high degree of modification as well as have sorbed moisture.

The material may then be compounded or "melt"-processed at 60-200 °C, depending on the properties of the material, using any suitable technique such as a melt-screw extruder or a twin-screw extruder. During the compounding or "melt"-processing the temperature may be high enough in order to make the material flow. The compounding or processing may be described as a "melt" process where the temperature is high enough to "melt" or impart the material with a melt-like state, or make it soft enough to make it flow. For compounding of material that has been allowed to sorb moisture, a lower temperature may be used such 60-100 °C or 70-90 °C. For dry material, i.e. material that has not been allowed to sorb moisture or water, a temperature of 120-160 °C may be used such as 130-150 °C. Compounding of the material may be done during 5-10 minutes. Lower temperatures are sometimes more preferred since it reduces the risk of discoloration.

In an embodiment the product is prepared by first compounding the material. The compounded material is then converted into particles or granules of suitable size, for example by cutting or grinding. The granules are then used in an extrusion-coating or film extrusion operation, i.e. extruded using an extrusion screw and pressed through a nozzle of a die, to form a flowing film to be applied and cooled on a substrate or a cooling roller.

Alternatively, the modified cellulose is kept in water dispersion and applied by dispersion coating onto the substrate and subsequently drying to evaporate off the water content.

The applied amount of the second, innermost, heat-sealable layer may be from 10 to 80 g/m², such as from 15 to 80 g/m², such as from 20 to 70 g/m², such as from 20 to 60 g/m², such as from 20 to 50 g/m², such as from 20 to 40 g/m². At below 15 g/m², a strong heat seal is not reliably obtained and above 100 g/m², such as above 80 g/m², there is no further improvement of seal strength seen. At from 20 to 60 g/m², of the dry dialcohol cellulose fibre material composition, it is possible to rely on sufficient heat seal strength, with sufficient seal strength remaining throughout the shelf life, i.e., storage time of a packaging container.

According to an embodiment, the second, innermost heat-sealable layer may be applied onto the coating surface of the vapour deposition coating, such as onto the metallization coating. A much-improved heat sealability was observed between the second, innermost heat-sealable layer and a substrate surface with a metallised layer, in comparison to a substrate surface of a paper or cellulose layer. The applied cellulose seems to form an even and smooth layer onto the smooth coated surface, resulting in a better heat sealable layer.

### Examples and description of preferred embodiments

In the following, preferred embodiments of the invention will be described with reference to the drawings, of which:
Fig. 1 schematically shows in cross-section a first embodiment of a heat-sealable, substantially plantbased and repulpable multilayer packaging material according to the invention,
Fig. 2a shows a schematic, cross-sectional view of a second embodiment of a heat-sealable, substantially plantbased and repulpable multilayer packaging material for the packaging of oxygen-sensitive goods,
Fig. 2b is showing a further embodiment of a heat-sealable, substantially plantbased and repulpable multilayer packaging material for the packaging of oxygen-sensitive goods,
Fig. 3a shows schematically a method, for dispersion coating of an aqueous composition of a material, such as a gas barrier material or a modified cellulose material, to produce a layer or coating of the material onto a substrate,
Fig. 3b shows schematically a method, for extrusion coating a layer of a heat sealable modified cellulose fibre composition onto a web sustrate,
Fig. 4a is showing a diagrammatic view of a plant for physical vapour deposition (PVD) coating, by using a solid metal evaporation piece, onto a substrate film,
Fig. 4b is showing a diagrammatic view of a plant for plasma enhanced chemical vapour deposition (PECVD) coating, by means of a magnetron plasma, onto a substrate film,
Fig. 5a, 5b, 5c and 5d are showing typical examples of packaging containers produced from the laminated packaging material according to the invention, and
Fig. 6 is showing the principle of how such packaging containers are manufactured from the packaging laminate in a continuous, roll-fed, form, fill and seal process.

### Examples (not forming a part of the invention)

### Comparative Example 1

A type of modified cellulose material of the type described in international patent application No. WO2018/146386A1, i.e. a molar mass controlled and subsequently chemically modified cellulose, by esterification with long chain fatty acids, manufactured by VTT Finland, was extrusion coated onto a paperboard substrate. The modified cellulose material was obtained by esterification with a carboxylic acid having an alkyl group with 8 carbon atoms. The molar mass control provides that the cellulose polymer molecules are shortened to obtain higher reactivity to the following esterification reaction.

The cellulose material was extrusion coated, by a Haake pilot extruder at a speed of 0,5 m/s (30 m/min) at about 150 degrees Celsius at a thickness of about 30 g/m², onto a paper substrate having a bending force of 80 mN and a grammage of 200 g/m². It provided an even, smooth coating. The adhesion of the this type of cellulose material was improved by a Corona surface treatment of the substrate surface.

The heat sealability of extrusion-coated layer was tested, by pressing and heating two surfaces of each of the respective samples towards each other and subsequently cooling the materials. An even and strong heat seal was obtained by constant heating of the materials, as well as by ultrasonic heat sealing methods.

### Example 1a (not forming a part of the invention)

A cellulose fibre composition, comprising 100 wt% cellulose fibres modified to dialcohol cellulose, with a degree of conversion of C2-C3 bonds in the cellulose fibres to dialcohol cellulose of 40 %, was dispersion coated in the form of an aqueous dispersion of 6 wt% well dispersed cellulose fibres, onto different substrate surfaces.

The coating operations were performed by means of so-called blade coating feeding the fibre dispersion through a die slot having a width of 200 µm and subsequently dried at 105 degrees Celsius, such that the amount applied was approximately 20 g/m², dry matter.

The three different substrates were
1) the inside (i.e. the backside, which is the rough and not printable side) of a conventional paperboard of the liquid paperboard type, having a bending force of 80 mN and a grammage of 200 g/m²,
2) the foil side of a pre-laminated web of the same liquid paperboard laminated to an aluminium foil, and
3) the surface of the metallised side of a pre-laminated web, made from the same liquid paperboard laminated to a metallised paper substrate (thin paper of about 45 g/m²)
4) the smooth paper surface (146 s Guerly porosity) of a high-density super-calendered paper layer of thin-release type (thin paper substrate)

The coatings were formed to even layers and were tested for heat sealability. It was concluded that the heat seal strength of seal bonds made from the coated pre-laminated foil-board of substrate No. 2) and the coated metallised surface of substrate No. 3) was much higher than of the seal bonds made from coated substrates No. 1) and 4), i.e. the paper and paperboard substrates.

The properties (e.g. heat sealbility) were evaluated as shown in Table 1.
O = low or no property observed
T = some/medium property observed
X = good/high property observed

**Table 1**

| **.Sample** | **Adhesion to substrate** | **Heat seal strength (IH/US/CH)** | **Re-pulpability (dispersibility in water) (E.2)** | **Further Observations** |
|---|---|---|---|---|
| C.1 MMC - C8 | Paperboard: T | X | O | Very nice layer - plastics look |
| E.1a-1) dispersion coating onto paperboard | X | T | X | Uneven fibrous looking layer |
| E.1a-2), -3) dispersion coating onto metal/metallised surface | X | X | X | Even semi-opaque looking layer |
| E.1a -4) dispersion coating onto smooth HD paper surface: | X | T | X | Uneven fibrous looking layer |
| E. 1b Extrusion coating onto paperboard | X | X | X | Uneven film if without plasticizer or sorbed water |

### Conclusions:

Inconsistent ultrasonic heat sealing results were observed with the coated paperboard web, No. E.1a-1). It is believed that the cause was uneven contact between the coated board surfaces, due to uneven coating thickness.

Regarding the coated webs No. E.1a-2) and -3), i.e. coated onto the side of the aluminium surface, good and strong heat seals were obtained with both induction heat sealing and ultrasonic heat sealing methods. The coating of the modified cellulose material had a more even thickness across the whole coated substrate metal surfaces.

### Example 1b (not forming a part of the invention)

The same cellulose material as used in Example 1a was dried to a moisture content of about 10 %. The material was extruded in the same way as the comparison cellulose materials of Comparative Example 1, at approximately 150 °Celsius and to an extrusion coating grammage of about 30 g/m², onto a paper substrate having a bending force of 80 mN and a grammage of 200 g/m².

Heat sealability of the extrusion-coated samples was equally confirmed to be good and strong, by means of a constant heat sealing method.

Generally, from heat sealed pouches of the coated materials of Examples 1a, 1b and Comparative example 1, it was seen that the seals were tight and not leaking packed liquid product, regardless of heat sealing methods and application methods used.

### Example 2 (not forming a part of the invention)

The substrate webs coated with the cellulose materials, as provided in Comparative example 1 and Examples 1a-1), 1a-4) and 1b, were tested for water dispersibility properties by high speed and high shear mixing (kitchen blender "Nordic Home") in the same way with equal amounts of water (200 ml), and coated paper, at room temperature, to a consistency of about 5 wt%. The un-coated corresponding paperboard of 80 mN and a grammage of 200 g/m², was also "re-pulped" in the same way as a reference, for comparison.

While the extrusion-coated paperboard of Comparative Example 1 was impossible to disperse, producing a fiber mixture with plastic flakes and pieces still present after 5 minutes of mixing, the other samples of Examples 1a-1), 1a-4) and 1b, as well as the reference paperboard sample, showed easy and quick water re-dispersibility to a well dispersed state within less than 5 minutes and a standard cycle, with no observed differences between the samples.

The claimed barrier materials and wet lamination adhesives, such as PVOH, starch and latexes, are known from other work to be water dispersible and certain to work in similar aqueous re-pulping experiments as well.

Further, relating to the attached figures:

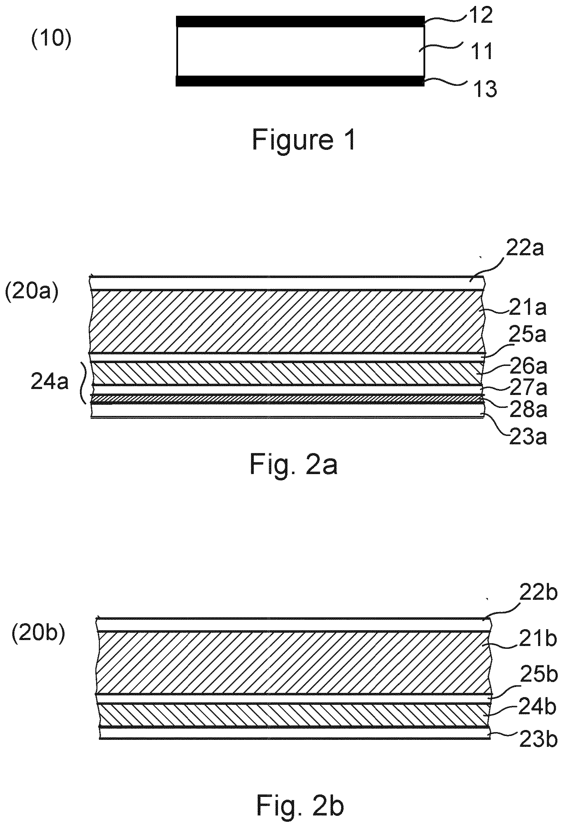

In Fig. 1, there is shown, in cross-section, an embodiment of a heat-sealable, substantially plantbased and repulpable multilayer packaging material 10, comprising a paperboard 11, having a bending force of 80 mN and a grammage weight of about 200 g/m², a first, outermost, protective and water-dispersible layer or coating 12 and a second, innermost, heat-sealable layer 13. Both the first, outermost and the second, innermost layers comprise in this embodiment cellulose fibres being partly modified to dialcohol cellulose, wherein the degree of conversion to dialcohol cellulose based on the number of oxidizable C2-C3 bonds in the cellulose fibres, is about 40%. The layer thickness of the second, innermost heat-sealable layer is about 30 g/m², while the layer thickness of the first, outermost layer is about 20 g/m².

This simple, multilayer packaging material represents a good packaging material for general packaging, which may provide protection towards leakage, liquid, dirt, mechanical abuse and also to a some extent oxygen barrier properties, because the modified cellulose fibres inherently may provide some level of oxygen barrier. The outer- and innermost layers 12 and 13 may be applied by aqueous dispersion coating and subsequent drying. Alternatively, they may be applied by extrusion coating of a more dry fibre composition of the modified cellulose.

Fig. 2a shows in cross-section a second embodiment of a heat-sealable, substantially plantbased and repulpable multilayer packaging material for the packaging of oxygen-sensitive goods, in which the laminated material comprises a paperboard bulk layer 21a of paperboard, having a bending force of 260 mN and a grammage weight of about 280 g/m². The multilayer packaging material further comprises a first, outermost protective, water-dispersible layer 22a and a second, innermost, heat-sealable layer 23a. Both the first, outermost and the second, innermost layers comprise in this embodiment cellulose fibres being partly modified to dialcohol cellulose, wherein the degree of conversion to dialcohol cellulose based on the number of oxidizable C2-C3 bonds in the cellulose fibres, is about 40 %. Both these layers 22a and 23a are thus heat-sealable and protective layers, which are at the same time possible to re-disperse into water. The layer thickness of the second, innermost heat-sealable layer is about 30 g/m², while the layer thickness of the first, outermost layer is about 20 g/m².

The bulk layer 21a is laminated to a layer portion 24a of gas barrier materials, comprising a paper substrate layer 26a made from a re-pulpable paper formulation, e.g. not a greaseproof paper of high hydrophobicity or similar, pre-coated with a first gas barrier coating 27a, comprising polyvinyl alcohol at about 3 g/m², dry content, and subsequently further coated with a vapour deposition coating 28a of aluminium metal at about 60 nm. The two paper layers, 21a and 26a, are laminated together by means of wet lamination with a an aqueous dispersion of an adhesive composition comprising polyvinyl alcohol at an amount of about 4 g/m², dry content, i.e. one of the two paper surfaces, here the paper surface of the paper substrate 26a, is coated with the adhesive composition, and the two webs are subsequently pressed together in a roller nip, to provide a pre-laminate of the bulk layer and the multilayer portion of gas barrier materials 24a.

The second, innermost heat-sealable layer of the modified cellulose is thus applied onto the inside of the metallisation surface coating 28a, while the first, outermost protective and water-dispersible layer 22a is applied onto the outside of the bulk layer 21a.

The resulting multilayer packaging material is readily re-pulpable in a recycling process to one single and same fraction of recycled cellulose fibres.

Fig. 2b shows a further embodiment of a heat-sealable, substantially plantbased and repulpable multilayer packaging material for the packaging of oxygen-sensitive goods, very similar to the multilayer packaging material described in figure 2a, however with a different layer portion 24b of a barrier layer. The layer portion 24b may thus comprise a barrier layer of a similar, or same, cellulose fibre composition partly modified to dialcohol cellulose, as used in the innermost and outermost layers, at a sufficient thickness to provide desired gas barrier properties. The layer 24b may be applied by dispersion coating of an aqueous composition of the modified cellulose fibres onto the paperboard 21b and subsequent drying, or by wet lamination 25b of a dry, pre-manufactured film or sheet 24b of a modified cellulose fibre composition, to the bulk layer. According to an embodiment, the layer, film or sheet 24b may be further coated with a vapour deposition coating (not shown), such as a metallised aluminium layer, for providing further water vapour barrier properties in the multilayer packaging material.

The bulk layer 21b is laminated to the barrier layer, film or sheet 24b, by means of wet lamination with an intermediate bonding layer 25b of a thin layer of an adhesive polymer, obtained by applying an aqueous dispersion of a starch-based adhesive onto one of the surfaces to be adhered to each other and subsequently pressing together in a roller nip. This lamination step is thus performed in an efficient cold or ambient lamination step at industrial speed without energy-consuming drying operation needed to accelerate the evaporation of the water. The dry amount applied of the intermediate bonding layer 25b is from 3 to 5 g/m² only.

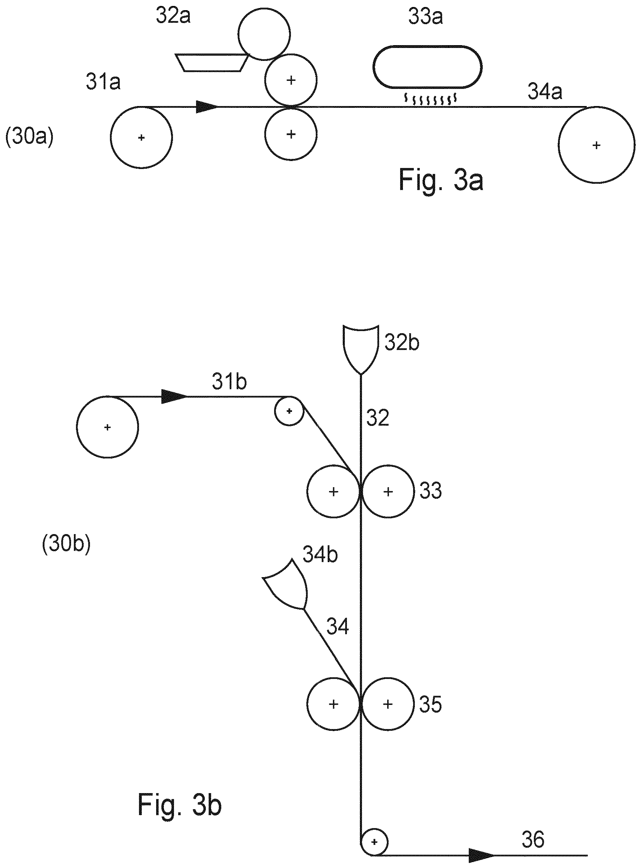

In Fig. 3a, a process 30a for coating an aqueous dispersion is shown, such as for applying the innermost, heat sealable layer 13;23a;23b, or a gas barrier coating 27a from an aqueous gas barrier composition, or an aqueous adhesive composition 25a;25b for wet laminating two webs together. The paper substrate web 31a (e.g. the paperboard 11 from Fig. 1 or the paper substrate 26a from Figure 2a) is forwarded to the dispersion coating station 32a, where the aqueous dispersion composition (not shown) is applied by means of rollers onto the top surface of the substrate. If the surfaces of the two sides of the substrate are different, usually there is one side more smooth and suitable for receiving a barrier coating (often that side is called the top side or the print side). Normally, the dispersion composition has an aqueous content of from 80 to 99 weight-%, and there will be a lot of water on the wet coated substrate that needs to be dried and evaporated by heat, to form a continuous coating, which is homogenous and has an even quality with respect to barrier properties and surface properties, i.e. evenness and wettability. The drying is carried out by a hot air dryer 33a, to form a dry coating, which also allows the moisture to evaporate and be removed from the surface of the substrate. The substrate temperature as it travels through the dryer, is kept constant at a temperature of from 60 to 80 °C. Drying may be carried out by hot air convection alone or partly assisted by irradiation heat from infrared IR-lamps.

The resulting coated substrate web 34a is forwarded to cool off and is wound onto a reel for intermediate storage and later further lamination or vapour deposition coating onto the coated substrate.

In the case of the dispersion composition being an adhesive composition, there is no drying step needed before laminating, i.e. pressing together the two webs to be adhered to each other. There may be a smaller conditioning, drying step after lamination but before winding onto a roller or further lamination operations, if the amount of moisture to the resulting laminate is considered too high.

Fig. 3b shows a process for extrusion lamination steps of the second, heat-sealable innermost layer, and optionally of the first, outermost protective layer, and the manufacturing of the packaging laminate 10, 20a or 20b, of Fig. 1, 2a and 2b, respectively, after the bulk layer 21a; 21b has been first laminated to the barrier-coated paper substrate 24a of Fig. 2a, or the barrier sheet or coating 24b of Fig. 2b). (The innermost and outermost layers may in other embodiments be applied by means of aqueous dispersion coating, as described in Fig. 3a.)

As explained in connection to Fig. 2a and 2b, the bulk layer paperboard 21a;21b may be laminated to the barrier-coated paper substrate 24a; 24b by means of wet, cold, aqueous dispersion, adhesive lamination, or less preferable, by means of extrusion lamination.

The paperboard 11; 21a;21b, or the resulting paper pre-laminate web, 31b, is forwarded from an intermediate storage reel, or directly from the lamination station for laminating the paper pre-laminate. The non-laminated side of the bulk layer 21a; 21b, i.e. its print side, is joined at a cooled roller nip 33 to a flowing curtain 32 of a composition of modified cellulose fibres, which is to form the outermost, protective layer 22a; 22b of the laminated material, the modified cellulose fibre composition being extruded from an extruder feedblock and die 32b.

Subsequently, the paper pre-laminated web, now having the outermost layer 12;22a;22b coated on its outer side, corresponding to the outside of a package, passes a second extruder feedblock and die 34b and a lamination nip 35, where a flowing curtain 34 of a composition of modified cellulose fibres is joined and coated onto the other side of the pre-laminate, i.e. on the inner side or the barrier-coated side of the paper substrate 11; 28a;24b. Thus, the innermost heat sealable layer(s) 13;23a;23b are coextrusion coated onto the inner side of the paper pre-laminate web, to form the finished laminated packaging material 36, which is finally wound onto a storage reel, not shown.

These two coextrusion steps at lamination roller nips 33 and 35, may also be performed as two consecutive steps in the opposite order.

According to another embodiment, one or both of the outermost layers may instead be applied in a pre-lamination station, where the coextrusion coated layer is first applied to the outside of the bulk paperboard layer or onto the metallisation coating of the barrier-coated paper substrate, and thereafter the two pre-laminated paper webs may be joined to each other. Alternatively, the outermost layer is much thinner and applied by means of aqueous dispersion coating instead, either before or after the lamination of the two pre-laminated paper webs to each other.

According to a further embodiment (not shown), the innermost, heat sealable layer 13; 23a;23b may be applied in the form of a pre-manufactured sheet or film, which is laminated to the coated side of the barrier-coated paper substrate 24a, or the barrier sheet 24b. The lamination then takes place by wet lamination with an interjacent aqueous adhesive composition, as applied and described in figure 3a.

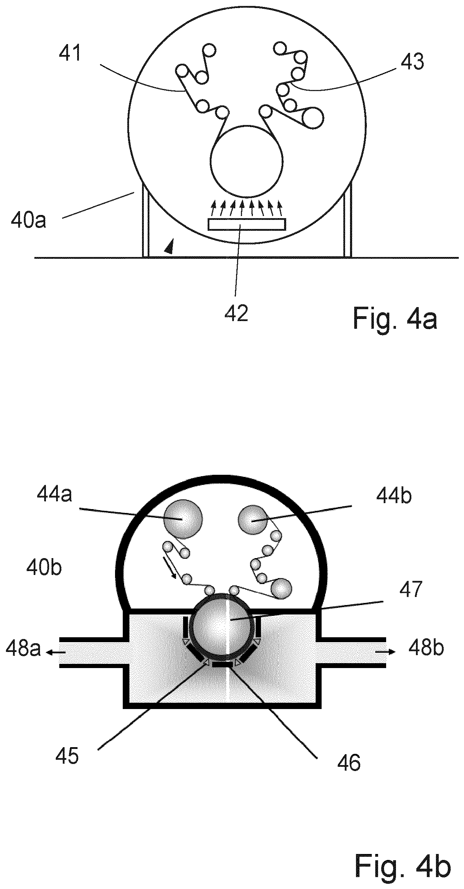

Fig. 4a is a diagrammatic view of an example of a plant 40a for physical vapour deposition, PVD, of e.g. an aluminium metal coating, onto a web substrate of the invention. The substrate web 41 is subjected, on its pre-coated side, to continuous evaporation deposition 42, of evaporised aluminium, to form a metallised layer of aluminium or, alternatively by a mixture of oxygen with aluminium vapour, to form a deposited coating of aluminium oxide. The coating is provided at a thickness from 5 to 100 nm, preferably from 10 to 50 nm, so that the barrier-coated paper 43 of the invention is formed. The aluminium vapour is formed from ion bombardment of an evaporation source 42of a solid piece of aluminium. For the coating of aluminium oxide, also some oxygen gas may be injected into the plasma chamber via inlet ports.

Fig. 4b is a diagrammatic view of an example of a plant for plasma enhanced chemical vapour deposition coating, PECVD, of e.g. hydrogenated amorphous diamond-like carbon coatings onto a web substrate of the invention. The web substrate 44a is subjected, on one of its surfaces, to continuous PECVD, of a plasma, in a plasma reaction zone 45 created in the space between magnetron electrodes 46, and a chilled web-transporting drum 47, which is also acting as an electrode, while the film is forwarded by the rotating drum, through the plasma reaction zone along the circumferential surface of the drum. The plasma for deposition coating of an amorphous DLC coating layer may for example be created from injecting a gas precursor composition comprising an organic hydrocarbon gas, such as acetylene or methane, into the plasma reaction chamber. Other gas barrier coatings may be applied by the same principal PECVD method, such as silicon oxide coatings, SiOx, then starting from a precursor gas of an organosilicon compound. The PECVD plasma chamber is kept at vaccum conditions by continuously evacuating the chamber at outlet ports 48a and 48b.

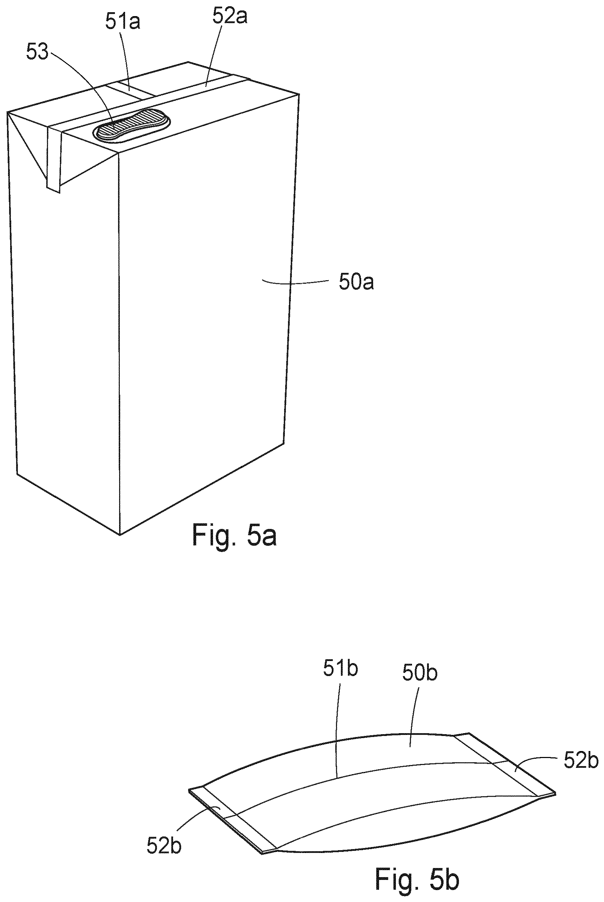

Fig. 5a shows an embodiment of a packaging container 50a produced from a packaging laminate according to the invention. The packaging container is particularly suitable for beverages, sauces, soups or the like. Typically, such a package has a volume of about 100 to 1000 ml. It may be of any configuration, but is preferably brick-shaped, having longitudinal and transversal seals 51a and 52a, respectively, and optionally an opening device 53. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the only partly folded packaging container is still is easy to handle and dimensionally stable enough to put on a shelf in the food store or on any flat surface.

Fig. 5b shows an alternative example of a packaging container 50b produced from an alternative packaging laminate according to the invention. The alternative packaging laminate is thinner by having a thinner paper bulk layer, and thus it is not dimensionally stable enough to form a parallellepipedic or wedge-shaped packaging container, and is not fold formed after transversal sealing 52b. The packaging container will remain a pillow-shaped pouch-like container and be distributed and sold in this form.

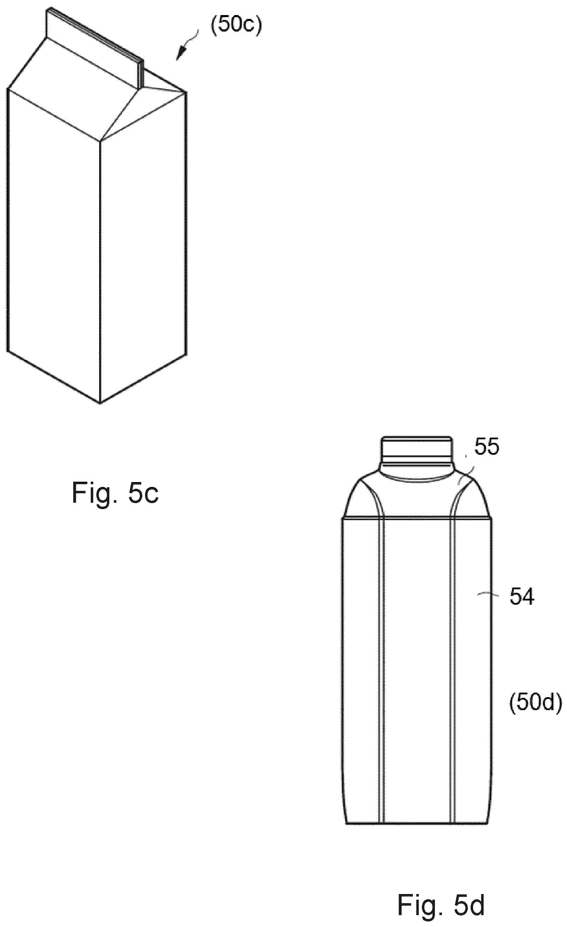

Fig. 5c shows a gable top package 50c, which is fold-formed from a pre-cut sheet or blank, from the laminated packaging material comprising a bulk layer of paperboard and the barrier-coated paper substrate of the invention. Also flat top packages may be formed from similar blanks of material.

Fig. 5d shows a bottle-like package 50d, which is a combination of a sleeve 54 formed from a pre-cut blanks of the laminated packaging material of the invention, and a top 55, which is formed by injection moulding plastics in combination with an opening device such as a screw cork or the like. This type of packages are for example marketed under the trade names of Tetra Top^{®} and Tetra Evero^{®}. Those particular packages are formed by attaching the moulded top 55 with an opening device attached in a closed position, to a tubular sleeve 54 of the laminated packaging material, sterilizing the thus formed bottle-top capsule, filling it with the food product and finally fold-forming the bottom of the package and sealing it.

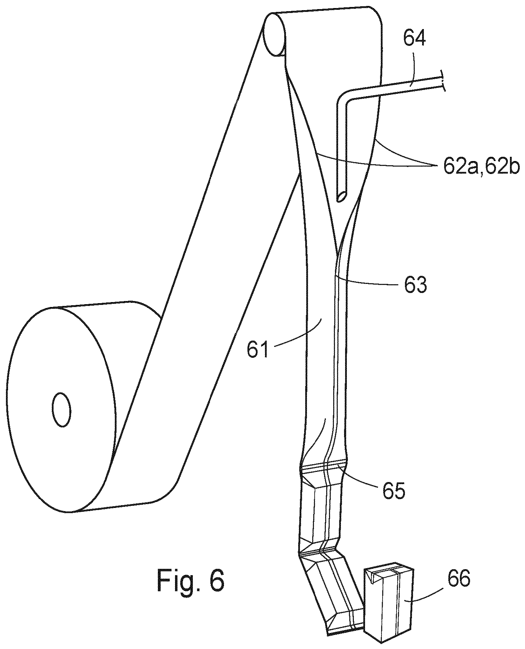

Fig. 6 shows the principle as described in the introduction of the present application, i.e. a web of packaging material is formed into a tube 61 by overlapping the longitudinal edges 62a, 62b of the web and heat sealing them to one another, to thus form an overlap joint 63. The tube is continuously filled 64 with the liquid food product to be filled and is divided into individual, filled packages by repeated, double transversal seals 65 of the tube at a pre-determined distance from one another below the level of the filled contents in the tube. The packages 66 are separated by cutting between the double transversal seals (top seal and bottom seal) and are finally shaped into the desired geometric configuration by fold formation along prepared crease lines in the material.

## Claims

1. Heat-sealable, substantially plant-based and re-pulpable multilayer packaging material (10; 20a; 20b), comprising a bulk layer (11;21a;21b) of paper, paperboard or other cellulose-based material, a first outermost, protective and water-dispersible layer or coating (12; 22a;22b), intended to be directed to the outside of a formed packaging container, and a second, innermost, heat-sealable layer (13; 23a; 23b) to be directed to, and to form the inside of a packaging container, wherein the second innermost, heat-sealable layer is made of a cellulose fibre composition, comprising cellulose fibres, optional additives and optional plasticizers, the cellulose fibres being partly modified to contain dialcohol cellulose, and wherein the amount of modified cellulose fibers in the innermost layer is from 80wt% to 100 wt%, calculated per dry weight; and wherein the degree of conversion of the partly modified cellulose to dialcohol cellulose, based on the total number of oxidizable C2-C3 bonds in the cellulose fibres and measured as described herein, is at least 10%, to render the full multilayer packaging material, including the second innermost, heat-selable layer, substantially plant-based and re-pulpable to one and a same recycling fraction of cellulose fibres, meaning that at least 90 wt-% of the materials of the multilayer packaging material are plant-based and also re-dispersible in aqueous medium, and wherein also the first, outermost, protective and water-dispersible layer or coating (12; 22a;22b) is made of a cellulose fibre composition, comprising cellulose fibres, optional additives and optional plasticizers, wherein the cellulose fibers are partly modified to contain dialcohol cellulose, wherein the amount of the modified cellulose fibers in the first outermost layer is from 80wt% to 100 wt%, calculated per dry weight; and wherein the degree of conversion of the partly modified cellulose to dialcohol cellulose, based on the total number of oxidizable C2-C3 bonds in the cellulose material and measured as described herein, is at least 10%, to render also the first, outermost, protective and water-dispersible layer heat-sealable, plant-based and re-pulpable.

2. Heat-sealable, substantially plant-based and re-pulpable multilayer packaging material (20a;20b), as claimed claim 1, having a layer or multilayer portion comprising gas barrier material(s) (24a;24b) arranged between the bulk layer (21a;21b) and the second, innermost heat-sealable layer (23a;23b).

3. Heat-sealable, substantially plant-based and re-pulpable multilayer packaging material (20a) as claimed in claim 2, wherein the layer or multilayer portion comprising gas barrier material(s) (24a) comprises an additional substrate layer of paper- or other water-dispersible cellulose-based material (26a), which is coated with at least one gas barrier material (27a,28a) to a total gas barrier coating thickness from 2 to 5000 nm, such as from 2 to 4000 nm.

4. Heat-sealable, substantially plant-based and re-pulpable multilayer packaging material (20a;20b), as claimed in any one of claims 2-3, wherein the layer or multilayer portion comprising gas barrier material(s) (24a;24b) comprises a layer or sheet (26a;24b) comprising microfibrillated cellulose or modified cellulose fibres, which contain dialcohol cellulose by a degree of conversion from cellulose to dialcohol cellulose, based on the total number of oxidizable C2-C3 bonds in the cellulose fibres, being at least 20%.

5. Heat-sealable, substantially plant-based and re-pulpable multilayer packaging material (20a), as claimed in claim 3, wherein the gas barrier material (27a,28a) coated onto the additional substrate layer of paper- or other water-dispersible cellulose-based material (26a) comprises a vapour deposition coating (28a), such as being selected from the group consisting of metallization coatings, aluminium oxide (AlOx) coatings, silicon oxide (SiOx) coatings, amorphous diamond-like carbon (DLC) coatings, such as an aluminium metallized coating.

6. Heat-sealable, substantially plant-based and re-pulpable multilayer packaging material (20a), as claimed in claim 3, wherein the additional substrate layer (26a) of paper- or other water-dispersible cellulose-based material is coated to a dry coating thickness from 100 to 5000 nm (from 0,1 to 5 µm), such as from 100 to 4000 nm (from 0,1 to 4 µm), such as from 300 to 3500 nm (from 0,3 to 3,5 µm), such as from 500 to 3000 nm (from 0,5 to 3 µm), such as from 500 to 2500 nm (from 0,5 to 2,5 µm), with a gas barrier material (27a) comprising a polymer selected from the group consisting of vinyl alcohol polymers and copolymers, such as from the group consisting of polyvinyl alcohol, PVOH, and ethylene vinyl alcohol, EVOH, starch and starch derivatives, hemicellulose and hemicellulose derivatives, nanofibrillar cellulose/ microfibrillar cellulose, NFC/ MFC, nanocrystalline cellulose, NCC, and blends of two or more thereof.

7. Heat-sealable, substantially plant-based and re-pulpable multilayer packaging material (20a), as claimed in any one of claims 3 or 5-6, wherein the additional substrate layer (26a) of paper- or other water-dispersible cellulose-based material is coated with a first coating (27a) of a gas barrier material formed by coating and subsequent drying of an aqueous dispersion or solution of a gas barrier material, and further has a vapour deposition coating (28a) of a gas barrier material selected from metals, metal oxides, inorganic oxides and amorphous diamond-like carbon, applied on the first coating.

8. Heat-sealable, substantially plant-based and re-pulpable multilayer packaging material (20a) as claimed in any one of claims 5 or 7, wherein the vapour deposition coating (28a) is applied to a thickness of from 10 to 80 nm, such as from 10 to 50 nm, such as from 10 to 45 nm.

9. Heat-sealable, substantially plant-based and re-pulpable multilayer packaging material (20a;20b) as claimed in any one of claims 2-8, wherein the layer or multilayer portion comprising gas barrier material(s) (24a;24b) is laminated to the bulk layer (21a;21b) by from 0.5 to 5 g/m², dry weight, of an interjacent bonding composition (25a;25b) comprising a binder selected from the group consisting of acrylic polymers and copolymers, starch, starch derivatives, cellulose derivatives, polymers and copolymers of vinyl acetate or vinyl alcohol, and copolymers of styrene-acrylic latex or styrene-butadiene latex.

10. Heat-sealable, substantially plant-based and re-pulpable multilayer packaging material (10;20a;20b) as claimed in any one of the preceding claims, wherein the second innermost, heat-sealable layer (13;23a;23b), and the first outermost, protective, re-pulpable layer or coating (12;22a;22b) made of the same cellulose fibre composition as the second, innermost, heat-sealable layer, further comprises a plasticizer at an amount from 0.5 to 20 wt-% based on the dry content of the layer.

11. Heat-sealable, substantially plant-based and re-pulpable multilayer packaging material as claimed in claim 10, wherein the plasticizer is a compound selected from the group consisting of polyols, such as glycerol, and polysaccharides, such as starch, starch derivatives or cellulose derivatives.

12. Heat-sealable, substantially plant-based and re-pulpable multilayer packaging material (10;20a;20b) as claimed in any one of the preceding claims, wherein the applied amount of the second, innermost, heat-sealable layer (13;23a;23b) is from 10 to 100 g/m², such as from 15 to 80 g/m², such as from 20 to 70 g/m², such as from 20 to 60 g/m², such as from 20 to 50 g/m², such as from 20 to 40 g/m².

13. Heat-sealable, substantially plant-based and re-pulpable multilayer packaging material (20a) as claimed in any one of claims 5 and 7-12, wherein the second, innermost heat-sealable layer (23a) is applied onto the vapour deposition coating (28a), such as onto the metallization coating.

14. Heat-sealable, substantially plant-based and re-pulpable multilayer packaging material (10;20a;20b) as claimed in any one of the preceding claims, wherein the degree of conversion in the second, innermost heat-sealable layer of the partly modified cellulose to dialcohol cellulose, based on the total number of oxidizable C2-C3 bonds in the cellulose, is least 30%, or at least 32%, or at least 40%, or at least 45% and less than 50%, such as from 30% to 45%.

15. Heat-sealed packaging container (50a; 50b; 50c; 50d) comprising the heat-sealable, substantially plant-based and re-pulpable multilayer packaging material (10;20a;20b) as defined in any one of claims 1-14.

16. Method of manufacturing (30a; 30b) a heat-sealable, substantially plant-based and re-pulpable multilayer packaging material (10;20a;20b) as defined in any one of claims 1-14, which comprises
a first step of providing and forwarding a substrate web (31a;31b), the substrate web being a web of a substantially plant-based and re-pulpable pre-laminated substrate structure or a single substrate layer,
a second step of providing (32a;32b) a cellulose fibre composition (32) comprising cellulose fibres, optional additives and plasticizers, wherein the cellulose fibres are partly modified to contain dialcohol cellulose and wherein the amount of modified cellulose fibres is from 80wt% to 100 wt%, calculated per dry matter weight; and wherein the degree of conversion of the partly modified cellulose to dialcohol cellulose, based on the total number of oxidizable C2-C3 bonds in the cellulose, is at least 10%,
a third step of applying (32a;33) the cellulose fibre composition onto the substrate web, to form a second innermost heat-sealable layer in the heat-sealable, substantially plant-based and re-pulpable multilayer packaging material (34a;36), to be directed to, and to form the inside of a packaging container.

17. Method as claimed in claim 16, wherein the third step of applying (30b) the cellulose fibre composition onto the substrate web (31b) is performed by extrusion coating (32b,33).

18. Method as claimed in claim 16, wherein the third step of applying (30a) the cellulose fibre composition onto the substrate web (31a) is performed by aqueous dispersion coating (32a) and subsequent drying (33a).

19. Method as claimed in any one of claims 16-18, wherein the substrate web is a pre-laminated multilayer structure comprising a bulk layer (21a;21b) and a layer or multilayer portion comprising a gas barrier material (24a;24b), the gas barrier material having a surface layer of a vapour deposition coating (28a), such as a metallization coating.

## Patentansprüche

1. Heißsiegelfähiges, im Wesentlichen pflanzliches und wiederaufschließbares mehrschichtiges Verpackungsmaterial (10; 20a; 20b), umfassend eine Volumenschicht (11;21a;21b) aus Papier, Pappe oder anderem Material auf Cellulosebasis, eine erste äußerste, schützende und wasserdispergierbare Schicht oder Beschichtung (12; 22a;22b), die zu der Außenseite eines gebildeten Verpackungsbehälters zeigen soll, und eine zweite, innerste, heißsiegelfähige Schicht (13; 23; 23b), die zu der Innenseite eines Verpackungsbehälters zeigen und sie bilden soll, wobei die zweite innerste, heißsiegelfähige Schicht aus einer Cellulosefaserzusammensetzung besteht, die Cellulosefasern, optionale Zusatzstoffe und optionale Weichmacher umfasst, wobei die Cellulosefasern teilweise modifiziert sind, um Dialkoholcellulose zu enthalten, und wobei die Menge an modifizierten Cellulosefasern in der innersten Schicht 80 Gew.-% bis 100 Gew.-%, berechnet nach Trockengewicht, beträgt; und wobei der Grad der Umwandlung der teilweise modifizierten Cellulose zu Dialkoholcellulose, bezogen auf die Gesamtzahl der oxidierbaren C2-C3-Bindungen in den Cellulosefasern und wie hier beschrieben gemessen, wenigstens 10 % beträgt, um das gesamte mehrschichtige Verpackungsmaterial, einschließlich der zweiten, innersten, heißsiegfähigen Schicht, im Wesentlichen pflanzlich und zu ein und derselben Recyclingfraktion von Cellulosefasern wiederaufschließbar zu machen, was bedeutet, dass wenigstens 90 Gew.-% der Materialien des mehrschichtigen Verpackungsmaterials pflanzlich und in wässrigem Medium redispergierbar sind, und wobei auch die erste, äußerste, schützende und wasserdispergierbare Schicht oder Beschichtung (12; 22a;22b) aus einer Cellulosefaserzusammensetzung besteht, die Cellulosefasern, optionale Zusatzstoffe und optionale Weichmacher umfasst, wobei die Cellulosefasern teilweise modifiziert sind, um Dialkoholcellulose zu enthalten, wobei die Menge der modifizierten Cellulosefasern in der ersten, äußersten Schicht 80 Gew.-% bis 100 Gew.-%, berechnet nach Trockengewicht, beträgt; und wobei der Grad der Umwandlung der teilweise modifizierten Cellulose zu Dialkoholcellulose, bezogen auf die Gesamtzahl der oxidierbaren C2-C3-Bindungen in dem Cellulosematerial und wie hierin beschrieben gemessen, wenigstens 10 % beträgt, um auch die erste, äußerste, schützende und wasserdispergierbare Schicht heißsiegelfähig, pflanzlich und wiederaufschließbar zu machen.

2. Heißsiegelfähiges, im Wesentlichen pflanzliches und wiederaufschließbares mehrschichtiges Verpackungsmaterial (20a;20b) nach Anspruch 1 mit einer Schicht oder einem mehrschichtigen Abschnitt umfassend Gasbarrierematerial(ien) (24a;24b), die zwischen der Volumenschicht (21a;21b) und der zweiten, innersten heißsiegelfähige Schicht (23a;23b) angeordnet sind.

3. Heißsiegelfähiges, im Wesentlichen pflanzliches und wiederaufschließbares mehrschichtiges Verpackungsmaterial (20a) nach Anspruch 2, wobei die Schicht oder der mehrschichtige Abschnitt, die bzw. der Gasbarrierematerial(ien) (24a) umfasst, eine zusätzliche Substratschicht aus Papier oder anderem wasserdispergierbarem Material auf Cellulosebasis (26a) umfasst, die mit wenigstens einem Gasbarrierematerial (27a,28a) auf eine Gesamtdicke der Gasbarrierenbeschichtung von 2 bis 5000 nm, wie z.B. von 2 bis 4000 nm, beschichtet ist.

4. Heißsiegelfähiges, im Wesentlichen pflanzliches und wiederaufschließbares mehrschichtiges Verpackungsmaterial (20a;20b) nach einem der Ansprüche 2-3, wobei die Schicht oder der mehrschichtige Abschnitt, die bzw. der Gasbarrierematerial(ien) (24a; 24b) umfassen, eine Schicht oder Folie (26a;24b) umfasst, umfassend mikrofibrillierte Cellulose oder modifizierte Cellulosefasern, die Dialkoholcellulose mit einem Umwandlungsgrad von Cellulose zu Dialkoholcellulose, bezogen auf die Gesamtzahl von oxidierbaren C2-C3-Bindungen in den cellulosefasern, von wenigstens 20 % enthalten.

5. Heißsiegelfähiges, im Wesentlichen pflanzliches und wiederaufschließbares mehrschichtiges Verpackungsmaterial (20a) nach Anspruch 3, wobei das auf die zusätzliche Substratschicht aus Papier oder anderem wasserdispergierbarem Material auf Cellulosebasis (26a) geschichtete Gasbarrierematerial (27a,28a) eine Aufdampfbeschichtung (28a) umfasst, wie z.B. ausgewählt aus der Gruppe bestehend aus Metallisierungsbeschichtungen, Aluminiumoxid(AlOx)-Beschichtungen, Siliciumoxid(SiOx)-Beschichtungen, Beschichtungen aus amorphem diamantartigem Kohlenstoff (DLC), wie z.B. Eine Aluminium-metallisierte Beschichtung.

6. Heißsiegelfähiges, im Wesentlichen pflanzliches und wiederaufschließbares mehrschichtiges Verpackungsmaterial (20a) nach Anspruch 3, wobei die zusätzliche Substratschicht (26a) aus Papier oder anderem wasserdispergierbarem Material auf Cellulosebasis auf eine Trockenbeschichtungsdicke von 100 bis 5000 nm (von 0,1 bis 5 um), wie z.B. von 100 bis 4000 nm (von 0,1 bis 4 µm), wie z.B. von 300 bis 3500 nm (von 0,3 bis 3,5 µm), wie z.B. von 500 bis 3000 nm (von 0,5 bis 3 µm), wie z.B. von 500 bis 2500 nm (von 0,5 bis 2,5 um), mit einem Gasbarrierematerial (27a) beschichtet ist, das ein Polymer ausgewählt aus der Gruppe bestehend aus Vinylalkoholpolymeren und -copolymeren, wie z.B. aus der Gruppe bestehend aus Polyvinylalkohol, PVOH und Ethylenvinylalkohol, EVOH, Stärke und Stärkederivaten, Hemicellulose und Hemicellulosederivaten, nanofibrillärer Cellulose/mikrofibrillärer Cellulose, NFC/MFC, nanokristalliner Cellulose, NCC und Gemischen von zwei oder mehr davon, umfasst.

7. Heißsiegelfähiges, im Wesentlichen pflanzliches und wiederauflösbares mehrschichtiges Verpackungsmaterial (20a) nach einem der Ansprüche 3 oder 5-6, wobei die zusätzliche Substratschicht (26a) aus Papier oder anderem wasserdispergierbarem Material auf Cellulosebasis mit einer ersten Beschichtung (27a) aus einem Gasbarrierematerial beschichtet ist, das durch Aufbringen und anschließendes Trocknen einer wässrigen Dispersion oder Lösung eines Gasbarrierematerials gebildet ist, und die ferner eine Aufdampfbeschichtung (28a) aus einem Gasbarrierematerial ausgewählt aus Metallen, Metalloxiden, anorganischen Oxiden und amorphem diamantartigem Kohlenstoff auf die erste Beschichtung aufgebracht aufweist.

8. Heißsiegelfähiges, im Wesentlichen pflanzliches und wiederaufschließbares mehrschichtiges Verpackungsmaterial (20a) nach einem der Ansprüche 5 oder 7, wobei die Aufdampfbeschichtung (28a) auf eine Dicke von 10 bis 80 nm, wie z.B. 10 bis 50 nm, wie z.B. 10 bis 45 nm, aufgebracht ist.

9. Heißsiegelfähiges, im Wesentlichen pflanzliches und wiederaufschließbares mehrschichtiges Verpackungsmaterial (20a;20b) nach einem der Ansprüche 2-8, wobei die Schicht oder der mehrschichtige Anteil, die/der Gasbarrierematerial(ien) (24a;24b) umfasst, mit 0,5 bis 5 g/m² Trockengewicht an einer dazwischenliegenden Bindemittelzusammensetzung (25a;25b), die ein Bindemittel ausgewählt aus der Gruppe bestehend aus Acrylpolymeren und -copolymeren, Stärke, Stärkederivaten, Cellulosederivativen, Polymeren und Copolymeren von Vinylacetat oder Vinylalkohol, und Copolymeren von Styrol-Acryl-Latex oder Styrol-Butadien-Latex umfasst, auf die Volumenschicht (21a;21b) laminiert ist.

10. Heißsiegelfähiges, im Wesentlichen pflanzliches und wiederaufschließbares mehrschichtiges Verpackungsmaterial (10;20a;20b) nach einem der vorstehenden Ansprüche, wobei die zweite, innerste, heißsiegelfähige Schicht (13;23a;23b) und die erste, äußerste, schützende, wiederaufschließbare Schicht oder Beschichtung (12;22a;22b), die aus der gleichen Cellulosefaserzusammensetzung wie die zweite, innerste, heißsiegelfähige Schicht oder Beschichtung besteht, ferner einen Weichmacher in einer Menge von 0,5 bis 20 Gew.-%, bezogen auf den Trockengehalt der Schicht, umfassen.

11. Heißsiegelfähiges, im Wesentlichen pflanzliches und wiederaufschließbares mehrschichtiges Verpackungsmaterial nach Anspruch 10, wobei der Weichmacher eine Verbindung ausgewählt aus der Gruppe bestehend aus Polyolen, wie z.B. Glycerol, und Polysacchariden, wie z.B. Stärke, Stärkederivate oder Cellulosederivate, ist.

12. Heißsiegelfähiges, im Wesentlichen pflanzliches und wiederaufschließbares mehrschichtiges Verpackungsmaterial (10;20a;20b) nach einem der vorstehenden Ansprüche, wobei die aufgebrachte Menge der zweiten, innersten, heißsiegelfähigen Schicht (13;23a;23b) von 10 bis 100 g/m², wie z.B. von 15 bis 80 g/m², wie z.B. von 20 bis 70 g/m², wie z.B. von 20 bis 60 g/m², wie z.B. von 20 bis 50 g/m², wie z.B. von 20 bis 40 g/m², besteht.

13. Heißsiegelfähiges, im Wesentlichen pflanzliches und wiederaufschließbares mehrschichtiges Verpackungsmaterial (20a) nach einem der Ansprüche 5 und 7-12, wobei die zweite, innerste heißsiegelfähige Schicht (23a) auf die Aufdampfbeschichtung (28a), wie z.B. auf die Metallisierungsbeschichtung, aufgebracht ist.

14. Heißsiegelfähiges, im Wesentlichen pflanzliches und wiederaufschließbares mehrschichtiges Verpackungsmaterial (10;20a;20b) nach einem der vorstehenden Ansprüche, wobei der Grad der Umwandlung in der zweiten, innersten heißsiegelfähigen Schicht der teilweise modifizierten Cellulose zu Dialkoholcellulose, bezogen auf die Gesamtzahl der oxidierbaren C2-C3-Bindungen in der Cellulose, wenigstens 30 % oder wenigstens 32 % oder wenigstens 40 % oder wenigstens 45 % und weniger als 50 %, wie z.B. von 30 % bis 45 %, beträgt.

15. Heißgesiegelter Verpackungsbehälter (50a; 50b; 50c; 50d) umfassend das heißsiegelfähige, im Wesentlichen pflanzliche und wiederaufschließbare mehrschichtige Verpackungsmaterial (10;20a;20b) nach einem der Ansprüche 1-14.

16. Verfahren zur Herstellung (30a; 30b) eines heißsiegelfähigen, im Wesentlichen pflanzlichen und wiederaufschließbaren mehrschichtigen Verpackungsmaterials (10;20a;20b) nach einem der Ansprüche 1-14, umfassend
einen ersten Schritt der Bereitstellung und Beförderung einer Substratbahn (31a;31b), wobei die Substratbahn eine Bahn einer im Wesentlichen pflanzlichen und wiederaufschließbaren vorlaminierten Substratstruktur oder einer einzelnen Substratschicht ist,
einen zweiten Schritt der Bereitstellung (32a;32b) einer Cellulosefaserzusammensetzung (32), die Cellulosefasern, optionale Zusatzstoffe und Weichmacher umfasst, wobei die Cellulosefasern teilweise modifiziert sind, um Dialkoholcellulose zu enthalten, und wobei die Menge an modifizierten Cellulosefasern 80 Gew.-% bis 100 Gew.-%, berechnet nach Trockengewicht, beträgt; und wobei der Grad der Umwandlung der teilweise modifizierten Cellulose zu Dialkoholcellulose, bezogen auf die Gesamtzahl an oxidierbaren C2-C3-Bindungen in der Cellulose, wenigstens 10 % beträgt,
einen dritten Schritt des Aufbringens (32a;33) der Cellulosefaserzusammensetzung auf die Substratbahn, um eine zweite, innerste, heißsiegelfähige Schicht in dem heißsiegelfähigen, im Wesentlichen pflanzlichen und wiederaufschließbaren mehrschichtigen Verpackungsmaterial (34a;36) zu bilden, die zu der Innenseite eines Verpackungsbehälters zeigen und sie bilden soll.

17. Verfahren nach Anspruch 16, wobei der dritte Schritt des Aufbringens (30b) der Cellulosefaserzusammensetzung auf die Substratbahn (31b) durch Extrusionsbeschichtung (32b,33) durchgeführt wird.

18. Verfahren nach Anspruch 16, wobei der dritte Schritt des Aufbringens (30a) der Cellulosefaserzusammensetzung auf die Substratbahn (31a) durch wässrige Dispersionsbeschichtung (32a) und anschließendes Trocknen (33a) durchgeführt wird.

19. Verfahren nach einem der Ansprüche 16-18, wobei die Substratbahn eine vorlaminierte mehrschichtige Struktur ist, die eine Volumenschicht (21a;21b) und eine Schicht oder einen mehrschichtigen Abschnitt umfasst, die/der ein Gasbarrierematerial (24a;24b) umfasst, wobei das Gasbarrierematerial eine Oberflächenschicht aus einer Aufdampfbeschichtung (28a), wie z.B. eine Metallisierungsbeschichtung, aufweist.

## Revendications

1. Matériau d'emballage multicouche thermoscellable, essentiellement d'origine végétale et repulpable (10 ; 20a ; 20b), comprenant une couche de masse (11 ; 21a ; 21b) de papier, carton ou autre matériau à base de cellulose, une première couche ou un premier revêtement le plus externe, protecteur et dispersible dans l'eau (12 ; 22a ; 22b), destiné à être dirigé vers l'extérieur d'un récipient d'emballage formé, et une deuxième couche thermoscellable la plus interne (13 ; 23a ; 23b) destinée à être dirigée vers un récipient d'emballage et former l'intérieur de celui-ci, dans lequel la deuxième couche thermoscellable la plus interne est constituée d'une composition de fibres cellulosiques, comprenant des fibres cellulosiques, facultativement des additifs et facultativement des plastifiants, les fibres cellulosiques étant partiellement modifiées pour contenir de la cellulose dialcoolique, et dans lequel la quantité de fibres cellulosiques modifiées dans la couche la plus interne est de 80 % en poids à 100 % en poids, calculée en poids sec ; et dans lequel le degré de conversion de la cellulose partiellement modifiée en cellulose dialcoolique, par rapport au nombre total de liaisons C2-C3 oxydables dans les fibres de cellulose et mesuré comme décrit dans la description, est d'au moins 10 %, pour rendre le matériau d'emballage multicouche complet, comprenant la deuxième couche thermoscellable la plus interne, essentiellement d'origine végétale et repulpable en une seule et même fraction de recyclage de fibres de cellulose, ce qui signifie qu'au moins 90 % en poids des matériaux du matériau d'emballage multicouche sont d'origine végétale et également redispersibles dans un milieu aqueux, et dans lequel, en outre, la première couche ou le premier revêtement le plus externe, protecteur et dispersible dans l'eau (12 ; 22a ; 22b) est constitué d'une composition de fibres cellulosiques, comprenant des fibres cellulosiques, des additifs éventuels et des plastifiants éventuels, dans lequel les fibres cellulosiques sont partiellement modifiées pour contenir de la cellulose dialcoolique, la quantité de fibres cellulosiques modifiées dans la première couche la plus externe étant de 80 % en poids à 100 % en poids, calculée en poids sec ; et dans lequel le degré de conversion de la cellulose partiellement modifiée en cellulose dialcoolique, par rapport au nombre total de liaisons C2-C3 oxydables dans le matériau cellulosique et mesuré comme décrit dans la description, est d'au moins 10 %, pour rendre également la première couche protectrice et dispersible dans l'eau la plus externe thermoscellable, à base de plantes et repulpable.

2. Matériau d'emballage multicouche thermoscellable, essentiellement d'origine végétale et repulpable (20a ; 20b) selon la revendication 1, comportant une couche ou une partie multicouche comprenant un ou plusieurs matériaux barrières aux gaz (24a ; 24b) disposés entre la couche de masse (21a ; 21b) et la deuxième couche thermoscellable la plus interne (23a ; 23b).

3. Matériau d'emballage multicouche thermoscellable, essentiellement d'origine végétale et repulpable (20a) selon la revendication 2, dans lequel la couche ou la partie multicouche comprenant un ou plusieurs matériaux barrières aux gaz (24a) comprend une couche de substrat supplémentaire en papier ou autre matériau à base de cellulose dispersible dans l'eau (26a), qui est revêtue d'au moins un matériau barrière aux gaz (27a, 28a) jusqu'à une épaisseur totale de revêtement barrière aux gaz de 2 à 5 000 nm, par exemple de 2 à 4 000 nm.

4. Matériau d'emballage multicouche thermoscellable, essentiellement d'origine végétale et repulpable (20a ; 20b) selon l'une quelconque des revendications 2 à 3, dans lequel la couche ou la partie multicouche comprenant un ou plusieurs matériaux barrières aux gaz (24a ; 24b) comprend une couche ou une feuille (26a ; 24b) comprenant de la cellulose microfibrillée ou des fibres de cellulose modifiées, qui contiennent de la cellulose dialcoolique, le degré de conversion de cellulose en cellulose dialcoolique, par rapport au nombre total de liaisons C2-C3 oxydables dans les fibres cellulosiques, étant d'au moins 20 %.

5. Matériau d'emballage multicouche thermoscellable, essentiellement d'origine végétale et repulpable (20a) selon la revendication 3, dans lequel le matériau barrière aux gaz (27a, 28a) enduit sur la couche de substrat supplémentaire de papier ou autre matériau à base de cellulose dispersible dans l'eau (26a) comprend un revêtement de dépôt en phase vapeur (28a), par exemple choisi dans le groupe constitué par des revêtements de métallisation, des revêtements d'oxyde d'aluminium (AlOx), des revêtements d'oxyde de silicium (SiOx), des revêtements de carbone sous forme de diamant amorphe (DLC), par exemple un revêtement métallisé d'aluminium.

6. Matériau d'emballage multicouche thermoscellable, essentiellement d'origine végétale et repulpable (20a) selon la revendication 3, dans lequel la couche de substrat supplémentaire (26a) en papier ou autre matériau à base de cellulose dispersible dans l'eau est revêtue à une épaisseur de revêtement sec de 100 à 5 000 nm (de 0,1 à 5 µm), par exemple de 100 à 4 000 nm (de 0,1 à 4 µm), par exemple de 300 à 3 500 nm (de 0,3 à 3,5 µm), par exemple de 500 à 3000 nm (de 0,5 à 3 µm), par exemple de 500 à 2500 nm (de 0,5 à 2,5 µm), avec un matériau barrière aux gaz (27a) comprenant un polymère choisi dans le groupe constitué par les polymères et copolymères d'alcool vinylique, par exemple dans le groupe constitué par l'alcool polyvinylique, PVOH, et éthylène-alcool vinylique, EVOH, l'amidon et les dérivés d'amidon, l'hémicellulose et les dérivés d'hémicellulose, la cellulose nanofibrillaire/cellulose microfibrillaire, NFC/MFC, la cellulose nanocristalline, NCC, et des mélanges d'au moins deux de ceux-ci.

7. Matériau d'emballage multicouche thermoscellable, essentiellement d'origine végétale et repulpable (20a) selon l'une quelconque des revendications 3 ou 5 à 6, dans lequel la couche de substrat supplémentaire (26a) en papier ou autre matériau à base de cellulose dispersible dans l'eau est revêtue d'un premier revêtement (27a) d'un matériau barrière aux gaz formé par enduction et séchage ultérieur d'une dispersion ou solution aqueuse d'un matériau barrière aux gaz, et comporte en outre un revêtement de dépôt en phase vapeur (28a) d'un matériau barrière aux gaz choisi parmi les métaux, les oxydes métalliques, les oxydes inorganiques et le carbone sous forme de diamant amorphe, appliqué sur le premier revêtement.

8. Matériau d'emballage multicouche thermoscellable, essentiellement d'origine végétale et repulpable (20a) selon l'une quelconque des revendications 5 ou 7, dans lequel le revêtement de dépôt en phase vapeur (28a) est appliqué à une épaisseur de 10 à 80 nm, par exemple de 10 à 50 nm, par exemple de 10 à 45 nm.

9. Matériau d'emballage multicouche thermoscellable, essentiellement d'origine végétale et repulpable (20a ; 20b) selon l'une quelconque des revendications 2 à 8, dans lequel la couche ou la partie multicouche comprenant un ou plusieurs matériaux barrières aux gaz (24a ; 24b) est stratifiée sur la couche de masse (21a ; 21b) de 0,5 à 5 g/m² en poids sec, d'une composition de liaison intercalée (25a ; 25b) comprenant un liant choisi dans le groupe constitué par des polymères et copolymères acryliques, l'amidon, les dérivés d'amidon, les dérivés de cellulose, les dérivés d'amidon, les polymères et copolymères d'acétate de vinyle ou d'alcool vinylique et les copolymères de latex styrène-acrylique ou de latex styrène-butadiène.

10. Matériau d'emballage multicouche thermoscellable, sensiblement d'origine végétale et repulpable (10 ; 20a ; 20b) selon l'une quelconque des revendications précédentes, dans lequel la deuxième couche thermoscellable la plus interne (13 ; 23a ; 23b) et la première couche ou le premier revêtement le plus externe, protecteur, repulpable (12 ; 22a ; 22b), constitués de la même composition de fibres de cellulose que la deuxième couche thermoscellable la plus interne, comprennent en outre un plastifiant en une quantité de 0,5 à 20 % en poids par rapport au poids sec de la couche.

11. Matériau d'emballage multicouche thermoscellable, essentiellement d'origine végétale et repulpable selon la revendication 10, dans lequel le plastifiant est un composé choisi dans le groupe constitué par les polyols, tels que le glycérol, et les polysaccharides, tels que l'amidon, les dérivés d'amidon ou les dérivés de cellulose.

12. Matériau d'emballage multicouche thermosoudable, essentiellement d'origine végétale et repulpable (10 ; 20a ; 20b) selon l'une quelconque des revendications précédentes, dans lequel la quantité appliquée de la deuxième couche thermoscellable la plus interne (13 ; 23a ; 23b) est de 10 à 100 g/m², par exemple de 15 à 80 g/m², par exemple de 20 à 70 g/m², par exemple de 20 à 60 g/m², par exemple de 20 à 50 g/m², par exemple de 20 à 40 g/m².

13. Matériau d'emballage multicouche thermoscellable, essentiellement d'origine végétale et repulpable (20a) selon l'une quelconque des revendications 5 et 7 à 12, dans lequel la deuxième couche thermoscellable la plus interne (23a) est appliquée sur le revêtement de dépôt en phase vapeur (28a), par exemple sur le revêtement de métallisation.

14. Matériau d'emballage multicouche thermoscellable, essentiellement d'origine végétale et repulpable (10 ; 20a ; 20b) selon l'une quelconque des revendications précédentes, dans lequel le degré de conversion dans la deuxième couche thermoscellable la plus interne de la cellulose partiellement modifiée en cellulose dialcoolique, par rapport au nombre total de liaisons C2-C3 oxydables dans la cellulose, est d'au moins 30 %, ou au moins 32 %, ou au moins 40 %, ou au moins 45 % et inférieur à 50 %, par exemple de 30 % à 45 %.

15. Récipient d'emballage thermoscellé (50a ; 50b ; 50c ; 50d) comprenant le matériau d'emballage multicouche thermoscellable, sensiblement d'origine végétale et repulpable (10 ; 20a ; 20b) tel que défini dans l'une quelconque des revendications 1 à 14.

16. Procédé de fabrication (30a ; 30b) d'un matériau d'emballage multicouche thermoscellable, sensiblement d'origine végétale et repulpable (10 ; 20a ; 20b) tel que défini dans l'une quelconque des revendications 1 à 14, qui comprend
une première étape de fourniture et de transfert d'une bande de substrat (31a ; 31b), la bande de substrat étant une bande ayant une structure de substrat préstratifié essentiellement d'origine végétale et repulpable ou d'une couche de substrat unique,
Une deuxième étape de fourniture (32a ; 32b) d'une composition de fibres cellulosiques (32) comprenant des fibres cellulosiques, facultativement des additifs et des plastifiants, les fibres cellulosiques étant partiellement modifiées pour contenir de la cellulose dialcoolique et la quantité de fibres cellulosiques modifiées étant de 80 % en poids à 100 % en poids, calculée en poids de matière sèche ; et le degré de conversion de la cellulose partiellement modifiée en cellulose dialcoolique, par rapport au nombre total de liaisons C2-C3 oxydables, étant d'au moins 10 %,
une troisième étape d'application (32a ; 33) de la composition de fibres cellulosiques sur la bande de substrat, pour former une deuxième couche thermoscellable la plus interne dans le matériau d'emballage multicouche thermoscellable, sensiblement d'origine végétale et repulpable (34a ; 36), de façon à être dirigée vers un récipient d'emballage et former l'intérieur de celui-ci.

17. Procédé selon la revendication 16, dans lequel la troisième étape d'application (30b) de la composition de fibres cellulosiques sur la bande de substrat (31b) est effectuée par enduction par extrusion (32b, 33).

18. Procédé selon la revendication 16, dans lequel la troisième étape d'application (30a) de la composition de fibres cellulosiques sur la bande de substrat (31a) est effectuée par enduction en dispersion aqueuse (32a) et séchage ultérieur (33a).

19. Procédé selon l'une quelconque des revendications 16 à 18, dans lequel la bande de substrat est une structure multicouche préstratifiée comprenant une couche de masse (21a ; 21b) et une couche ou une partie multicouche comprenant un matériau barrière aux gaz (24a ; 24b), le matériau barrière aux gaz ayant une couche superficielle d'un revêtement de dépôt en phase vapeur (28a), tel qu'un revêtement de métallisation.
